# EUROPEAN PATENT SPECIFICATION

(11) **EP 4 428 216 B1**
(45) Date of publication and mention of the grant of the patent: **01.07.2026**
(21) Application number: 24181458.1
(22) Date of filing: 24.05.2022
(51) Int. Cl.: A23D 7/00, A23D 7/02, A23D 9/00, A23D 9/02, C11C 3/10

(54) **FAT COMPOSITION AND WATER-IN-OIL EMULSION**
FETTZUSAMMENSETZUNG UND WASSER-IN-ÖL-EMULSION
COMPOSITION DE GRAISSE ET ÉMULSION EAU DANS HUILE

(30) Priority: 25.05.2021 EP 21175725
(43) Date of publication of application: 11.09.2024
(62) Divisional of application: 22730275.9
(73) Proprietor: Bunge SA, 1206 Geneva (CH)
(72) Inventor: DONG, Jiajia, 1521AZ Wormerveer (NL); MULDER, Hendrikus, 1521AZ Wormerveer (NL); MA, Jun, 1506MA Zaandam (NL); PIISPA, Eija Marjatta, 21200 Raisio (FI); SIEKER, Ina, 32257 Bünde (DE)
(74) Representative: Potter Clarkson

(56) References cited:
- WO-A1-2020/054701
- US-A- 3 491 677
- US-A- 4 208 445
- FABIANA ANDREIA SCHÄFER DE MARTINI SOARES ET AL: "Chemical interesterification of blends of palm stearin, coconut oil, and canola oil: physicochemical properties", JOURNAL OF AGRICULTURAL AND FOOD CHEMISTRY, AMERICAN CHEMICAL SOCIETY, US, vol. 60, no. 6, 15 February 2012 (2012-02-15), pages 1461 - 1469, XP002716822, ISSN: 0021-8561, [retrieved on 20120109], DOI: 10.1021/JF204111T

## Description

This invention relates to a fat composition, a process of making the fat composition, use of the fat composition, a water-in-oil emulsion, a process of preparing the water-in-oil emulsion and use of the water-in-oil emulsion.

### Background

Fats and oils are important ingredients of food products and are used extensively in the food industry. Fats and oils are used for example in a water-in-oil emulsion, such as margarine or spread, which comprises a fat phase which is the continuous phase and an aqueous phase which is the dispersed phase that is distributed into the continuous phase.

The water phase in general comprises water, milk, milk protein, milk powder, plant milk, salt, preservatives, flavors, pH regulation agents and colorants. The fat phase generally comprises or consists of a fat composition which strongly influences the structure, the texture and the organoleptic properties of the water-in-oil emulsion such as margarine or spread. In addition, mono- and diglyceride, distilled monoglyceride and lecithin are commonly used in such water-in-oil emulsion as emulsifier.

WO 03/096817 relates to the preparation of an edible triglyceride fat which is able to structure a liquid oil where the resulting fat enables the preparation of a natural fat phase for use in spread manufacture. However, it is strongly discouraged to use any fat containing high amounts of palmitic acid, such as palm oil or cocoa butter, which thereby limits the selection of the suitable raw materials.

EP-A-3 245 876 discloses a spreadable food composition comprising interesterified cocoa butter as hardstock. However, it is observed that by using such completely interesterified hardstock, the margarine product will have undesirable brittleness, irregular structure and even graininess tendency, which eventually result in poor spreadability and organoleptic properties.

WO 2014/020114 relates to a fat blend composition allowing the preparation of a fat spread composition. The purpose is to reduce the amount of saturated fatty acids used, in particular palmitic acid. However, it is generally known that the reduction of the amount of saturated fatty acids would result in undesirable hardness and an overly soft texture of the margarine or spread which is not acceptable for most consumers.

WO 2006/131539 relates to a non-hydrogenated vegetable fat composition suitable for use in confectionery fats. WO 2012/052471 relates to confectionery filling products. WO 2016/162529 relates to a deep fried food product.

WO 2019/185444 relates to a non-hydrogenated fat composition that is used in confectionery products such as whipped cream or shortening for bakery applications. However, there is no disclosure relating to a water-in-oil emulsion product.

Other relevant prior art includes US3491677 which describes fat compositions for use in chocolate products and Soares et al. (J. Ag. Fd. Chem. (2012) 60, p. 1461-1469) who teach the production of spreadable fat compositions for use in margarines.

There remains a need for a fat composition suitable to be used in a spreadable water-in-oil emulsion such as margarine or spread, having improved spreadability and excellent organoleptic properties such as melting behavior, while unpleasant texture resulting in poor spreadability and undesirable post-hardening are largely limited and suppressed.

### Description of the invention

According to the present invention, which is defined by the claims, there is provided a fat composition comprising:
from 18.0% to 45.0% by weight of lauric acid (C12:0); from 5.0% to 20.0% by weight of palmitic acid (C16:0); from 4.0% to 18.0% by weight of stearic acid (C18:0); a weight ratio of lauric acid (C12:0) to stearic acid (C18:0) of from 2.0 to 4.5; and a weight ratio of lauric acid (C12:0) to palmitic acid (C16:0) of from 1.5 to 5.0; said percentages of acid referring to acids bound as acyl groups in glycerides in the fat composition and being based on the total weight of C8 to C24 fatty acids; and from 5.0% to 25.0% by weight of total CN32 triglycerides, CN34 triglycerides and CN36 triglycerides; from 10.0% to 45.0% by weight of total CN44 triglycerides, CN46 triglycerides and CN48 triglycerides; and from 2.0% to 12.0% by weight of total CN50 triglycerides and CN52 triglycerides; based on total triglycerides present in the composition.

The fat composition of the invention has been found to be particularly useful in a water-in-oil emulsion such as margarine or spread having improved sensory properties, in particular melting behavior such as advantageous quick melting without mouth coating behavior or waxiness. In particular, it is believed that due to the fatty acid composition such as lauric acid, palmitic acid and stearic acid contents and the triglyceride composition as defined in the fat composition of the invention, the spreadable water-in-oil emulsion products using the fat composition according to the invention typically have desirable hardness and excellent spreadability. Also, the good spreadability of the water-in-oil emulsions of the invention can be maintained during the shelf life without undesirable degradation.

The term "fat" refers to glyceride fats and oils containing fatty acid acyl groups and does not imply any particular melting point. The term "oil" is used synonymously with "fat".

The term "fatty acid" refers to straight chain saturated or unsaturated (including mono- and poly unsaturated) carboxylic acids having from 8 to 24 carbon atoms. A fatty acid having x carbon atoms and y double bonds may be denoted Cx:y. For example, palmitic acid may be denoted C16:0 and oleic acid may be denoted C18:1. The fatty acid profile may be determined by fatty acid methyl ester analysis (FAME) using gas chromatography according to ISO 12966-2 and ISO 12966-4. Thus, percentages of fatty acids in compositions (e.g. palmitic acid (C16:0), stearic acid (C18:0), oleic acid (C18:1) etc.) referred to herein, unless otherwise stated, include both acyl groups such as tri-, di- and mono- glycerides and are based on the total weight of C8 to C24 fatty acid residues.

Triglyceride composition may be determined for example based on molecular weight differences (Carbon Number (CN)) by GC (AOCS Ce 5-86). The notation triglyceride CNxx denotes triglycerides having xx carbon atoms in the fatty acyl groups (thus excluding the carbon atoms from the glycerol, as is standard practice) e.g., CN54 includes tristearin. Amounts of triglycerides specified with each carbon number (CN), as is customary terminology in the art, are percentages by weight based on total triglycerides of CN26 to CN62 present in the fat composition.

The fat composition according to the invention may be made from naturally occurring or synthetic fats, fractions of naturally occurring or synthetic fats, or mixtures thereof, that satisfy the requirements defined herein. Preferably, the fat composition is, or is derived from, one or more vegetable fats or animal fats. More preferably, the fat composition is, or is derived from, one or more vegetable fats. It is also preferred that the fat composition according to the invention is, or is derived from non-hydrogenated fats. The term "non-hydrogenated" means that the fat composition is not prepared from a fat that has been subjected to hydrogenation to convert unsaturated fatty acyl groups to saturated fatty acyl groups.

The fat composition according to the invention preferably comprises from 3.5% to 11.0% by weight of total caprylic acid (C8:0) and capric acid (C10:0), more preferably from 4.0% to 10.0% by weight, even more preferably from 4.5% to 9.5% by weight and most preferably from 5.0% to 9.0% by weight.

The fat composition according to the invention comprises from 18.0% to 45.0% by weight of lauric acid (C12:0), preferably from 18.5% to 40.0%, more preferably from 19.5% to 38.0% by weight, even more preferably from 20.0% to 36.5% by weight and most preferably from 20.5% to 35.0% by weight.

The fat composition according to the invention comprises from 5.0% to 20.0% by weight of palmitic acid (C16:0), preferably from 6.0% to 18.0% by weight, more preferably from 7.0% to 17.0% by weight, even more preferably from 8.0% to 16.0% by weight and most preferably from 9.0% to 15.0% by weight.

The fat composition according to the invention comprises from 4.0% to 18.0% by weight of stearic acid (C18:0), preferably from 4.5% to 16.0% by weight, more preferably from 5.0% to 15.0% by weight, even more preferably from 5.5% to 14.0% by weight and most preferably from 5.7% to 13.0% by weight.

The fat composition according to the invention preferably comprises from 9.0% to 37.0% by weight of oleic acid (C18:1), more preferably from 10.0% to 36.0% by weight, even more preferably from 11.0% to 35.0% by weight and most preferably from 12.0% to 34.0% by weight.

The fat composition according to the invention preferably comprises from 1.0% to 30.0% by weight of linoleic acid (C18:2), more preferably from 2.0% to 28.0% by weight, even more preferably from 3.0% to 27.0% by weight and most preferably from 4.0% to 26.0% by weight.

The fat composition according to the invention preferably comprises at most 6.0% by weight of linolenic acid (C18:3), more preferably at most 5.0 by weight, even more preferably from 0.0% to 4.5% by weight and most preferably from 0.1% to 4.0% by weight.

The fat composition according to the invention preferably comprises from 35.0% to 90.0% by weight of saturated fatty acid (SAFA), more preferably from 40.0% to 88.0% by weight, even more preferably from 45.0% to 87.0% by weight and most preferably from 50.0% to 86.0% by weight.

The fat composition according to the invention preferably has a content of trans fatty acid residues of less than 2.0% by weight, more preferably less than 1.5% by weight, even more preferably less than 1.0% by weight and most preferably less than 0.5% by weight.

The fat composition according to the invention preferably has an iodine value of from 20 to 90, more preferably from 24 to 85, even more preferably from 26 to 80 and most preferably from 28 to 75. The term "iodine value" refers to the number of grams of iodine that could be added to 100g of oil. Iodine value may be calculated according to AOCS Cd 1c-85 based on total acids bound as acyl groups in glycerides in the fat composition being based on the total weight of C8 to C24 fatty acids. Iodine value may alternatively be measured by AOCS Method Cd 1-25.

In a preferred embodiment, the fat composition according to the invention comprises from 3.5% to 11.0% by weight of total caprylic acid (C8:0) and capric acid (C10:0); from 18.5% to 40.0% by weight of lauric acid (C12:0); from 6.0% to 18.0% by weight of palmitic acid (C16:0); from 4.5% to 16.0% by weight of stearic acid (C18:0); from 9.0% to 37.0% by weight of oleic acid (C18:1);and from 35.0% to 90.0% by weight of saturated fatty acid (SAFA).

In a more preferred embodiment, the fat composition according to the invention comprises from 4.0% to 10.0% by weight of total caprylic acid (C8:0) and capric acid (C10:0); from 19.5% to 38.0% by weight of lauric acid (C12:0); from 7.0% to 17.0% by weight of palmitic acid (C16:0); from 5.0% to 15.0% by weight of stearic acid (C18:0); from 10.0% to 36.0% by weight of oleic acid (C18:1);and from 40.0% to 88.0% by weight of saturated fatty acid (SAFA).

In an even more preferred embodiment, the fat composition according to the invention comprises from 4.5% to 9.5% by weight of total caprylic acid (C8:0) and capric acid (C10:0); from 20.0% to 36.5% by weight of lauric acid (C12:0); from 8.0% to 16.0% by weight of palmitic acid (C16:0); from 5.5% to 14.0% by weight of stearic acid (C18:0); from 11.0% to 35.0% by weight of oleic acid (C18:1);and from 45.0% to 87.0% by weight of saturated fatty acid (SAFA).

In a most preferred embodiment, the fat composition according to the invention comprises from 5.0% to 9.0% by weight of total caprylic acid (C8:0) and capric acid (C10:0); from 20.5% to 35.0% by weight of lauric acid (C12:0); from 9.0% to 15.0% by weight of palmitic acid (C16:0); from 5.7% to 13.0% by weight of stearic acid (C18:0); from 12.0% to 34.0% by weight of oleic acid (C18:1);and from 50.0% to 86.0% by weight of saturated fatty acid (SAFA).

The fat composition according to the invention comprises a weight ratio of lauric acid (C12:0) to stearic acid (C18:0) of from 2.0 to 4.5, preferably from 2.2 to 4.3, more preferably from 2.3 to 4.2, even more preferably from 2.4 to 4.1 and most preferably from 2.5 to 4.0.

The fat composition according to the invention comprises a weight ratio of lauric acid (C12:0) to palmitic acid (C16:0) of from 1.5 to 5.0, preferably from 1.7 to 4.5, more preferably from 1.8 to 4.0, even more preferably from 1.9 to 3.5 and most preferably from 2.0 to 3.0.

The fat composition according to the invention preferably comprises a weight ratio of stearic acid (C18:0) to palmitic acid (C16:0) of from 0.3 to 1.5, more preferably from 0.4 to 1.3, even more preferably from 0.5 to 1.1 and most preferably from 0.5 to 1.0.

In a preferred embodiment, the fat composition according to the invention comprises from 18.5% to 40.0% by weight of lauric acid (C12:0); from 6.0% to 18.0% by weight of palmitic acid (C16:0); from 4.5% to 16.0% by weight of stearic acid (C18:0); a weight ratio of lauric acid (C12:0) to stearic acid (C18:0) of from 2.2 to 4.3; a weight ratio of lauric acid (C12:0) to palmitic acid (C16:0) of from 1.7 to 4.5; and a weight ratio of stearic acid (C18:0) to palmitic acid (C16:0) of from 0.3 to 1.5.

In a more preferred embodiment, the fat composition according to the invention comprises from 19.5% to 38.0% by weight of lauric acid (C12:0); from 7.0% to 17.0% by weight of palmitic acid (C16:0); from 5.0% to 15.0% by weight of stearic acid (C18:0); a weight ratio of lauric acid (C12:0) to stearic acid (C18:0) of from 2.3 to 4.2; a weight ratio of lauric acid (C12:0) to palmitic acid (C16:0) of from 1.8 to 4.0; and a weight ratio of stearic acid (C18:0) to palmitic acid (C16:0) of from 0.4 to 1.3.

In an even more preferred embodiment, the fat composition according to the invention comprises from 20.0% to 36.5% by weight of lauric acid (C12:0); from 8.0% to 16.0% by weight of palmitic acid (C16:0); from 5.5% to 14.0% by weight of stearic acid (C18:0); a weight ratio of lauric acid (C12:0) to stearic acid (C18:0) of from 2.4 to 4.1; a weight ratio of lauric acid (C12:0) to palmitic acid (C16:0) of from 1.9 to 3.5; and a weight ratio of stearic acid (C18:0) to palmitic acid (C16:0) of from 0.5 to 1.1.

In a most preferred embodiment, the fat composition according to the invention comprises from 20.5% to 35.0% by weight of lauric acid (C12:0); from 9.0% to 15.0% by weight of palmitic acid (C16:0); from 5.7% to 13.0% by weight of stearic acid (C18:0); a weight ratio of lauric acid (C12:0) to stearic acid (C18:0) of from 2.5 to 4.0; a weight ratio of lauric acid (C12:0) to palmitic acid (C16:0) of from 2.0 to 3.0; and a weight ratio of stearic acid (C18:0) to palmitic acid (C16:0) of from 0.5 to 1.0.

The fat composition according to the invention comprises from 5.0% to 25.0% by weight of total CN32 triglycerides, CN34 triglycerides and CN36 triglycerides, preferably from 6.0% to 23.0% by weight, more preferably from 7.0% to 22.0% by weight, even more preferably from 8.0% to 21.0% by weight and most preferably from 10.0% to 20.0% by weight.

The fat composition according to the invention comprises from 10.0% to 45.0% by weight of total CN44 triglycerides, CN46 triglycerides and CN48 triglycerides, preferably from 10.5% to 43.0% by weight, more preferably from 11.0% to 42.0% by weight, even more preferably from 12.0% to 40.0% by weight and most preferably from 13.0% to 39.0%.

The fat composition according to the invention comprises from 2.0% to 12.0% by weight of total CN50 triglycerides and CN52 triglycerides, preferably from 3.0% to 11.0%, more preferably from 4.0% to 10.0% by weight, even more preferably from 4.5% to 10.0% by weight and most preferably from 5.0% to 10.0% by weight.

In a preferred embodiment, the fat composition comprises from 18.5% to 40.0% by weight of lauric acid (C12:0); from 6.0% to 18.0% by weight of palmitic acid (C16:0); from 4.5% to 16.0% by weight of stearic acid (C18:0); a weight ratio of lauric acid (C12:0) to stearic acid (C18:0) of from 2.2 to 4.3; and a weight ratio of lauric acid (C12:0) to palmitic acid (C16:0) of from 1.7 to 4.5; said percentages of acid referring to acids bound as acyl groups in glycerides in the fat composition and being based on the total weight of C8 to C24 fatty acids; and from 6.0% to 23.0% by weight of total CN32 triglycerides, CN34 triglycerides and CN36 triglycerides; from 10.5% to 43.0% by weight of total CN44 triglycerides, CN46 triglycerides and CN48 triglycerides; and from 3.0% to 11.0% by weight of total CN50 triglycerides and CN52 triglycerides; based on total triglycerides present in the composition.

In a more preferred embodiment, the fat composition comprises from 19.5% to 38.0% by weight of lauric acid (C12:0); from 7.0% to 17.0% by weight of palmitic acid (C16:0); from 5.0% to 15.0% by weight of stearic acid (C18:0); a weight ratio of lauric acid (C12:0) to stearic acid (C18:0) of from 2.3 to 4.2; and a weight ratio of lauric acid (C12:0) to palmitic acid (C16:0) of from 1.8 to 4.0; said percentages of acid referring to acids bound as acyl groups in glycerides in the fat composition and being based on the total weight of C8 to C24 fatty acids; and from 7.0% to 22.0% by weight of total CN32 triglycerides, CN34 triglycerides and CN36 triglycerides; from 11.0% to 42.0% by weight of total CN44 triglycerides, CN46 triglycerides and CN48 triglycerides; and from 4.0% to 10.0% by weight of total CN50 triglycerides and CN52 triglycerides; based on total triglycerides present in the composition.

In an even more preferred embodiment, the fat composition comprises from 20.0% to 36.5% by weight of lauric acid (C12:0); from 8.0% to 16.0% by weight of palmitic acid (C16:0); from 5.5% to 14.0% by weight of stearic acid (C18:0); a weight ratio of lauric acid (C12:0) to stearic acid (C18:0) of from 2.4 to 4.1; and a weight ratio of lauric acid (C12:0) to palmitic acid (C16:0) of from 1.9 to 3.5; said percentages of acid referring to acids bound as acyl groups in glycerides in the fat composition and being based on the total weight of C8 to C24 fatty acids; and from 8.0% to 21.0% by weight of total CN32 triglycerides, CN34 triglycerides and CN36 triglycerides; from 12.0% to 40.0% by weight of total CN44 triglycerides, CN46 triglycerides and CN48 triglycerides; and from 4.5% to 10.0% by weight of total CN50 triglycerides and CN52 triglycerides; based on total triglycerides present in the composition.

In a most preferred embodiment, the fat composition comprises from 20.5% to 35.0% by weight of lauric acid (C12:0); from 9.0% to 15.0% by weight of palmitic acid (C16:0); from 5.7% to 13.0% by weight of stearic acid (C18:0); a weight ratio of lauric acid (C12:0) to stearic acid (C18:0) of from 2.5 to 4.0; and a weight ratio of lauric acid (C12:0) to palmitic acid (C16:0) of from 2.0 to 3.0; said percentages of acid referring to acids bound as acyl groups in glycerides in the fat composition and being based on the total weight of C8 to C24 fatty acids; and from 10.0% to 20.0% by weight of total CN32 triglycerides, CN34 triglycerides and CN36 triglycerides; from 13.0% to 39.0% by weight of total CN44 triglycerides, CN46 triglycerides and CN48 triglycerides; and from 5.0% to 10.0% by weight of total CN50 triglycerides and CN52 triglycerides; based on total triglycerides present in the composition.

The fat composition according to the invention preferably comprises at most 6.0% by weight of CN32 triglycerides, more preferably from 0.1% to 5.0% by weight, even more preferably from 0.5% to 4.5% by weight and most preferably from 1.0% to 4.5% by weight.

The fat composition according to the invention preferably comprises at most 8.0% by weight of CN34 triglycerides, more preferably from 0.1% to 7.0% by weight, even more preferably from 1.0% to 6.0% by weight and most preferably from 2.0% to 6.0% by weight.

The fat composition according to the invention preferably comprises from 3.0% to 15.0% by weight of CN36 triglycerides, more preferably from 4.0% to 14.0% by weight, even more preferably from 5.0% to 12.0% by weight and most preferably from 6.0 % to 11.0% by weight.

The fat composition according to the invention preferably comprises from 7.0% to 20.0% by weight of CN42 triglycerides, more preferably from 7.5% to 19.0% by weight, even more preferably from 8.0% to 18.0% by weight and most preferably from 8.5% to 17.0% by weight.

The fat composition according to the invention preferably comprises from 4.0% to 16.0% by weight of CN44 triglycerides, more preferably from 4.5% to 15.0% by weight, even more preferably from 5.0% to 14.0% by weight and most preferably from 5.5% to 13.0% by weight.

The fat composition according to the invention preferably comprises from 3.0% to 15.0% by weight of CN46 triglycerides, more preferably from 3.5% to 14.0% by weight, even more preferably from 4.0% to 13.0% by weight and most preferably from 4.5% to 12.0% by weight.

The fat composition according to the invention preferably comprises from 2.5% to 17.0% by weight of CN48 triglycerides, more preferably from 3.0% to 16.0% by weight, even more preferably from 3.5% to 15.0% by weight and most preferably from 4.0% to 14.0% by weight.

The fat composition according to the invention preferably comprises from 0.5% to 9.0% by weight of CN50 triglycerides, more preferably from 1.0% to 8.0% by weight, even more preferably from 1.5% to 7.0% by weight and most preferably from 2.0% to 6.0% by weight.

The fat composition according to the invention preferably comprises from 2.0% to 10.0% by weight of CN52 triglycerides, more preferably from 2.5% to 9.0% by weight, even more preferably from 3.0% to 8.0% by weight and most preferably from 3.5% to 7.0% by weight.

In a preferred embodiment, the fat composition according to the invention comprises from 6.0% to 23.0% by weight of total CN32 triglycerides, CN34 triglycerides and CN36 triglycerides; from 10.5% to 43.0% by weight of total CN44 triglycerides, CN46 triglycerides and CN48 triglycerides; from 3.0% to 11.0% by weight of total CN50 triglycerides and CN52 triglycerides; at most 6.0% by weight of CN32 triglycerides; at most 8.0% by weight of CN34 triglycerides; from 7.0% to 20.0% by weight of CN42 triglycerides; from 4.0% to 16.0% by weight of CN44 triglycerides; and from 3.0% to 15.0% by weight of CN46 triglycerides.

In a more preferred embodiment, the fat composition according to the invention comprises from 7.0% to 22.0% by weight of total CN32 triglycerides, CN34 triglycerides and CN36 triglycerides; from 11.0% to 42.0% by weight of total CN44 triglycerides, CN46 triglycerides and CN48 triglycerides; from 4.0% to 10.0% by weight of total CN50 triglycerides and CN52 triglycerides; from 0.1% to 5.0% by weight of CN32 triglycerides; from 0.1% to 7.0% by weight of CN34 triglycerides; from 7.5% to 19.0% by weight of CN42 triglycerides; from 4.5% to 15.0% by weight of CN44 triglycerides; and from 3.5% to 14.0% by weight of CN46 triglycerides.

In an even more preferred embodiment, the fat composition according to the invention comprises from 8.0% to 21.0% by weight of total CN32 triglycerides, CN34 triglycerides and CN36 triglycerides; from 12.0% to 40.0% by weight of total CN44 triglycerides, CN46 triglycerides and CN48 triglycerides; from 4.5% to 10.0% by weight of total CN50 triglycerides and CN52 triglycerides; from 0.5% to 4.5% by weight of CN32 triglycerides; from 1.0% to 6.0% by weight of CN34 triglycerides; from 8.0% to 18.0% by weight of CN42 triglycerides; from 5.0% to 14.0% by weight of CN44 triglycerides; and from 4.0% to 13.0% by weight of CN46 triglycerides.

In a most preferred embodiment, the fat composition according to the invention comprises from 10.0% to 20.0% by weight of total CN32 triglycerides, CN34 triglycerides and CN36 triglycerides; from 13.0% to 39.0% by weight of total CN44 triglycerides, CN46 triglycerides and CN48 triglycerides; from 5.0% to 10.0% by weight of total CN50 triglycerides and CN52 triglycerides; from 1.0% to 4.5% by weight of CN32 triglycerides; from 2.0% to 6.0% by weight of CN34 triglycerides; from 8.5% to 17.0% by weight of CN42 triglycerides; from 5.5% to 13.0% by weight of CN44 triglycerides; and from 4.5% to 12.0% by weight of CN46 triglycerides.

The solid fat contents of the fat composition according to the invention are measured on unstabilized fat according to ISO 8292-1.

The fat composition according to the invention preferably has from 30.0 to 65.0 solid fat content at 10°C, more preferably from 32.0 to 60.0, even more preferably from 33.0 to 57.0 and most preferably from 34.0 to 55.0.

The fat composition according to the invention preferably has from 10.0 to 40.0 solid fat content at 20°C, more preferably from 11.0 to 35.0, even more preferably from 11.5 to 32.0 and most preferably from 12.0 to 30.0.

The fat composition according to the invention preferably has at most 20.0 solid fat content at 25°C, more preferably from 1.0 to 19.0, even more preferably from 2.0 to 18.0 and most preferably from 3.0 to 15.0.

The fat composition according to the invention preferably has at most 10.0 solid fat content at 30°C, more preferably at most 8.0, even more preferably at most 7.0 and most preferably from 0.0 to 5.0.

The fat composition according to the invention preferably has at most 5.0 solid fat content at 35°C, more preferably at most 4.0, even more preferably at most 3.0 and most preferably from 0.0 to 2.0.

In a preferred embodiment, the fat composition according to the invention has from 30.0 to 65.0 solid fat content at 10°C; from 10.0 to 40.0 solid fat content at 20°C; at most 20.0 solid fat content at 25°C; at most 10.0 solid fat content at 30°C; and at most 5.0 solid fat content at 35°C.

In a more preferred embodiment, the fat composition according to the invention has from 32.0 to 60.0 solid fat content at 10°C; from 11.0 to 35.0 solid fat content at 20°C; from 1.0 to 19.0 solid fat content at 25°C; at most 8.0 solid fat content at 30°C; and at most 4.0 solid fat content at 35°C.

In an even more preferred embodiment, the fat composition according to the invention has from 33.0 to 57.0 solid fat content at 10°C; from 11.5 to 32.0 solid fat content at 20°C; from 2.0 to 18.0 solid fat content at 25°C; at most 7.0 solid fat content at 30°C; and at most 3.0 solid fat content at 35°C.

In a most preferred embodiment, the fat composition according to the invention has from 34.0 to 55.0 solid fat content at 10°C; from 12.0 to 30.0 solid fat content at 20°C; from 3.0 to 15.0 solid fat content at 25°C; from 0.0 to 5.0 solid fat content at 30°C; and from 0.0 to 2.0 solid fat content at 35°C.

In a preferred embodiment, the non-hydrogenated fat composition according to the invention comprises from 3.5% to 11.0% by weight of total caprylic acid (C8:0) and capric acid (C10:0); from 18.5% to 40.0% by weight of lauric acid (C12:0); from 6.0% to 18.0% by weight of palmitic acid (C16:0); from 4.5% to 16.0% by weight of stearic acid (C18:0); from 9.0% to 37.0% by weight of oleic acid (C18:1); from 35.0% to 90.0% by weight of saturated fatty acid (SAFA); a weight ratio of lauric acid (C12:0) to stearic acid (C18:0) of from 2.2 to 4.3; a weight ratio of lauric acid (C12:0) to palmitic acid (C16:0) of from 1.7 to 4.5; and a weight ratio of stearic acid (C18:0) to palmitic acid (C16:0) of from 0.3 to 1.5; said percentages of acid referring to acids bound as acyl groups in glycerides in the fat composition and being based on the total weight of C8 to C24 fatty acids; and from 6.0% to 23.0% by weight of total CN32 triglycerides, CN34 triglycerides and CN36 triglycerides; from 10.5% to 43.0% by weight of total CN44 triglycerides, CN46 triglycerides and CN48 triglycerides; from 3.0% to 11.0% by weight of total CN50 triglycerides and CN52 triglycerides; at most 6.0% by weight of CN32 triglycerides; at most 8.0% by weight of CN34 triglycerides; from 7.0% to 20.0% by weight of CN42 triglycerides; from 4.0% to 16.0% by weight of CN44 triglycerides; and from 3.0% to 15.0% by weight of CN46 triglycerides; based on total triglycerides present in the composition; and having from 30.0 to 65.0 solid fat content at 10°C; from 10.0 to 40.0 solid fat content at 20°C; at most 20.0 solid fat content at 25°C; at most 10.0 solid fat content at 30°C; and at most 5.0 solid fat content at 35°C; wherein the solid fat content is measured on unstabilized fat according to ISO 8292-1.

In a more preferred embodiment, the non-hydrogenated fat composition according to the invention comprises from 4.0% to 10.0% by weight of total caprylic acid (C8:0) and capric acid (C10:0); from 19.5% to 38.0% by weight of lauric acid (C12:0); from 7.0% to 17.0% by weight of palmitic acid (C16:0); from 5.0% to 15.0% by weight of stearic acid (C18:0); from 10.0% to 36.0% by weight of oleic acid (C18:1); from 40.0% to 88.0% by weight of saturated fatty acid (SAFA); a weight ratio of lauric acid (C12:0) to stearic acid (C18:0) of from 2.3 to 4.2; a weight ratio of lauric acid (C12:0) to palmitic acid (C16:0) of from 1.8 to 4.0; and a weight ratio of stearic acid (C18:0) to palmitic acid (C16:0) of from 0.4 to 1.3; said percentages of acid referring to acids bound as acyl groups in glycerides in the fat composition and being based on the total weight of C8 to C24 fatty acids; and from 7.0% to 22.0% by weight of total CN32 triglycerides, CN34 triglycerides and CN36 triglycerides; from 11.0% to 42.0% by weight of total CN44 triglycerides, CN46 triglycerides and CN48 triglycerides; from 4.0% to 10.0% by weight of total CN50 triglycerides and CN52 triglycerides; from 0.1% to 5.0% by weight of CN32 triglycerides; from 0.1% to 7.0% by weight of CN34 triglycerides; from 7.5% to 19.0% by weight of CN42 triglycerides; from 4.5% to 15.0% by weight of CN44 triglycerides; and from 3.5% to 14.0% by weight of CN46 triglycerides; based on total triglycerides present in the composition; and having from 32.0 to 60.0 solid fat content at 10°C; from 11.0 to 35.0 solid fat content at 20°C; from 1.0 to 19.0 solid fat content at 25°C; at most 8.0 solid fat content at 30°C; and at most 4.0 solid fat content at 35°C; wherein the solid fat content is measured on unstabilized fat according to ISO 8292-1.

In an even more preferred embodiment, the non-hydrogenated fat composition according to the invention comprises from 4.5% to 9.5% by weight of total caprylic acid (C8:0) and capric acid (C10:0); from 20.0% to 36.5% by weight of lauric acid (C12:0); from 8.0% to 16.0% by weight of palmitic acid (C16:0); from 5.5% to 14.0% by weight of stearic acid (C18:0); from 11.0% to 35.0% by weight of oleic acid (C18:1); from 45.0% to 87.0% by weight of saturated fatty acid (SAFA); a weight ratio of lauric acid (C12:0) to stearic acid (C18:0) of from 2.4 to 4.1; a weight ratio of lauric acid (C12:0) to palmitic acid (C16:0) of from 1.9 to 3.5; and a weight ratio of stearic acid (C18:0) to palmitic acid (C16:0) of from 0.5 to 1.1; said percentages of acid referring to acids bound as acyl groups in glycerides in the fat composition and being based on the total weight of C8 to C24 fatty acids; and from 8.0% to 21.0% by weight of total CN32 triglycerides, CN34 triglycerides and CN36 triglycerides; from 12.0% to 40.0% by weight of total CN44 triglycerides, CN46 triglycerides and CN48 triglycerides; from 4.5% to 10.0% by weight of total CN50 triglycerides and CN52 triglycerides; from 0.5% to 4.5% by weight of CN32 triglycerides; from 1.0% to 6.0% by weight of CN34 triglycerides; from 8.0% to 18.0% by weight of CN42 triglycerides; from 5.0% to 14.0% by weight of CN44 triglycerides; and from 4.0% to 13.0% by weight of CN46 triglycerides; based on total triglycerides present in the composition; and having from 33.0 to 57.0 solid fat content at 10°C; from 11.5 to 32.0 solid fat content at 20°C; from 2.0 to 18.0 solid fat content at 25°C; at most 7.0 solid fat content at 30°C; and at most 3.0 solid fat content at 35°C; wherein the solid fat content is measured on unstabilized fat according to ISO 8292-1.

In a most preferred embodiment, the non-hydrogenated fat composition according to the invention comprises from 5.0% to 9.0% by weight of total caprylic acid (C8:0) and capric acid (C10:0); from 20.5% to 35.0% by weight of lauric acid (C12:0); from 9.0% to 15.0% by weight of palmitic acid (C16:0); from 5.7% to 13.0% by weight of stearic acid (C18:0); from 12.0% to 34.0% by weight of oleic acid (C18:1); from 50.0% to 86.0% by weight of saturated fatty acid (SAFA); a weight ratio of lauric acid (C12:0) to stearic acid (C18:0) of from 2.5 to 4.0; a weight ratio of lauric acid (C12:0) to palmitic acid (C16:0) of from 2.0 to 3.0; and a weight ratio of stearic acid (C18:0) to palmitic acid (C16:0) of from 0.5 to 1.0; said percentages of acid referring to acids bound as acyl groups in glycerides in the fat composition and being based on the total weight of C8 to C24 fatty acids; and from 10.0% to 20.0% by weight of total CN32 triglycerides, CN34 triglycerides and CN36 triglycerides; from 13.0% to 39.0% by weight of total CN44 triglycerides, CN46 triglycerides and CN48 triglycerides; from 5.0% to 10.0% by weight of total CN50 triglycerides and CN52 triglycerides; from 1.0% to 4.5% by weight of CN32 triglycerides; from 2.0% to 6.0% by weight of CN34 triglycerides; from 8.5% to 17.0% by weight of CN42 triglycerides; from 5.5% to 13.0% by weight of CN44 triglycerides; and from 4.5% to 12.0% by weight of CN46 triglycerides; based on total triglycerides present in the composition; and having from 34.0 to 55.0 solid fat content at 10°C; from 12.0 to 30.0 solid fat content at 20°C; from 3.0 to 15.0 solid fat content at 25°C; from 0.0 to 5.0 solid fat content at 30°C; and from 0.0 to 2.0 solid fat content at 35°C; wherein the solid fat content is measured on unstabilized fat according to ISO 8292-1.

The fat composition according to the invention preferably comprises an interesterified fat blend of at least a lauric fat wherein the lauric fat in the blend is at least 50% by weight, preferably from 56% to 85% by weight and more preferably from 58% to 80% by weight of the blend. The lauric fat is preferably selected from a group consisting of coconut oil, palm kernel oil, a fraction thereof and a mixture thereof. More preferably, the lauric fat is coconut oil.

In a preferred embodiment, the fat composition according to the invention comprises an interesterified fat blend of cocoa butter and coconut oil. In a more preferred embodiment, the fat composition according to the invention comprises an interesterified fat blend of cocoa butter and coconut oil wherein the weight ratio of cocoa butter to coconut oil is from 42:58 to 20:80. The fat composition according to the invention preferably further contains a liquid oil which may be selected from a group consisting of sunflower oil, high oleic sunflower oil, high oleic rapeseed oil, high oleic canola oil, high oleic soybean oil, rapeseed oil, rice oil, soybean oil, chia oil, flaxseed oil, corn oil, safflower oil, olive oil, canola oil, grapeseed oil, pumpkin oil, sesame oil, walnut oil, hazelnut oil, a fraction thereof and a mixture thereof. More preferably, the fat composition according to the invention further contains from 5% to 30% by weight of liquid oil, such as sunflower oil or rapeseed oil.

In another preferred embodiment, the fat composition according to the invention comprises an interesterified fat blend of cocoa butter, coconut oil and a liquid oil. The liquid oil is preferably selected from a group consisting of sunflower oil, high oleic sunflower oil, high oleic rapeseed oil, high oleic canola oil, high oleic soybean oil, rapeseed oil, rice oil, soybean oil, chia oil, flaxseed oil, corn oil, safflower oil, olive oil, canola oil, grapeseed oil, pumpkin oil, sesame oil, walnut oil, hazelnut oil, a fraction thereof and a mixture thereof. More preferably, the fat composition according to the invention comprises or consists of an interesterified fat blend of from 58% to 80% by weight of coconut oil; from 10% to 40% by weight of cocoa butter; and from 2% to 30% by weight of liquid oil.

The term "lauric fat" refers to a fat containing a significant amount of lauric acid (C12:0), such as at least 25% by weight of lauric acid (C12:0) and preferably at least 35% by weight, typically derived from sources such as coconut oil or palm kernel oil. The term "non-lauric fat" refers to a fat containing no or trace of lauric acid (C12:0), typically less than 2% by weight in the fat. The term "liquid oil" refers to an oil which is liquid at room temperature, typically such as sunflower oil, rapeseed oil or soybean oil.

The invention also relates to a process for making the fat composition according to the invention comprising the steps of: a) providing a lauric fat, preferably selected from a group consisting of coconut oil, palm kernel oil, a fraction thereof and a mixture thereof; b) providing a non-lauric fat, preferably selected from a group consisting of cocoa butter, shea butter, illipe butter, sal butter, kokum fat, mango fat, high stearic sunflower oil, high stearic soybean oil, high stearic rapeseed oil, high stearic canola oil, allanblackia fat, pentadesma fat, sonchy fat, palm oil, palm stearin, palm olein, cottonseed oil, fully hydrogenated palm oil, fully hydrogenated palm stearin, a fraction thereof and a mixture thereof; c) blending the lauric fat of step a) and the one or more non-lauric fat of step b), wherein the weight percentage of the lauric fat in the blend is at least 50% by weight, preferably from 56% to 85% by weight and more preferably from 58% to 80% by weight; d) interesterifying the blend formed in step c); and e) blending the interesterified fat blend formed in step d) with a liquid oil preferably selected from a group consisting of sunflower oil, high oleic sunflower oil, high oleic rapeseed oil, high oleic canola oil, high oleic soybean oil, rapeseed oil, rice oil, soybean oil, chia oil, flaxseed oil, corn oil, safflower oil, olive oil, canola oil, grapeseed oil, pumpkin oil, sesame oil, walnut oil, hazelnut oil, a fraction thereof and a mixture thereof.

Alternatively, the process for making the fat composition according to the invention comprises the steps of: a) providing a lauric fat, preferably selected from a group consisting of coconut oil, palm kernel oil, a fraction thereof and a mixture thereof; b) providing a non-lauric fat, preferably selected from a group consisting of cocoa butter, shea butter, illipe butter, sal butter, kokum fat, mango fat, high stearic sunflower oil, high stearic soybean oil, high stearic rapeseed oil, high stearic canola oil, allanblackia fat, pentadesma fat, sonchy fat, palm oil, palm stearin, palm olein, cottonseed oil, fully hydrogenated palm oil, fully hydrogenated palm stearin, a fraction thereof and a mixture thereof; c) providing a liquid oil selected from a group consisting of sunflower oil, high oleic sunflower oil, high oleic rapeseed oil, high oleic canola oil, high oleic soybean oil, rapeseed oil, rice oil, soybean oil, chia oil, flaxseed oil, corn oil, safflower oil, olive oil, canola oil, grapeseed oil, pumpkin oil, sesame oil, walnut oil, hazelnut oil, a fraction thereof and a mixture thereof; d) blending the lauric fat of step a), the non-lauric fat of step b) and the liquid oil of step c) , wherein the weight percentage of the lauric fat in the blend is at least 40% by weight, preferably from 45% to 75% by weight and more preferably from 50% to 70% by weight; and e) interesterifying the composition formed in step d).

The interesterification is also typically known as a redistribution of the fatty acid moieties present in a triglyceride oil over its glycerol moieties and may be carried out chemically or enzymatically.

The invention also relates to use of the fat composition according to the invention in a confectionery product, a bakery product or a culinary product, preferably in Danish pastry, puff pastry, pie, cake, cookie, ice-cream, confectionery filing, cream, whipped cream, compound chocolate, frying, sauce and meat replacer. The fat composition according to the invention may be used as the main fat component for the final product of the food applications or be combined with other oils and fats used in the final product of the food applications.

The invention also relates to a water-in-oil emulsion comprising from 5% to 95% by weight of the fat composition according to the invention and from 5% to 95% by weight of an aqueous phase. Preferably, the water-in-oil emulsion of the invention comprises from 10% to 90% by weight of the fat composition according to the invention and from 10% to 90% by weight of an aqueous phase. More preferably, the water-in-oil emulsion of the invention comprises from 15% to 85% by weight of the fat composition according to the invention and from 15% to 85% by weight of an aqueous phase.

The term "water-in-oil emulsion" refers to an emulsion where water as the dispersed phase is distributed into oil as the continuous phase, as is well known in the art. The aqueous phase generally comprises or consists (essentially) of water and/or other ingredients such as milk, milk derivatives such as whey, buttermilk or cream, or plant milk such as rice milk, soy milk, oat milk or almond milk, and the derivatives thereof.

The water-in-oil emulsion according to the invention is preferably an edible spreadable emulsion. More preferably, the water-in-oil emulsion according to the invention is margarine or spread. These products are in general considered as plant or vegan butter alternatives or substitutes to be used in the same way as butter in various food applications such as confectionery, bakery or culinary applications.

Preferably, the water-in-oil emulsion according to the invention further comprises one or more ingredients selected from emulsifier, flavor, milk, milk powder, colorant, salt, pH regulator, sugar, sirup, cereal, legume, seed, fruit, nut, plant extract, vegetable juice, plant milk, plant protein, antioxidant, preservative, starch, modified starch, fiber, thickener, stabilizer, probiotic and vitamin.

Preferably, the water-in-oil emulsion according to the invention comprises from 0.05% to 5.0% by weight of at least one emulsifier, more preferably from 0.05 to 3.0% by weight and even more preferably from 0.1% to 2.0% by weight. The at least one emulsifier is preferably selected from the group consisting of mono- and/or diglycerides of fatty acids, distilled monoglycerides, lecithins, organic esters of mono- and/or diglycerides of fatty acids, polyglycerol esters, polyglycerolpolyricinoleate, sucrose esters and sucroglycerides, stearoyl-lactylates, 1-2 propanediol esters, sorbitan esters and mixtures thereof.

The colorants are preferably selected from the group consisting of carotenes, annatto and mixture thereof, more preferably beta-carotenes. The colorants may be one or more ingredient containing carotenes, annatto, beta-carotenes and mixture thereof, such as carrot juice. The antioxidants are preferably tocopherols and/or natural extracts, such as from tea or oregano. The preservatives are preferably sorbic acid, sorbates, benzoates or mixtures thereof. The plant proteins are preferably selected from the group consisting of sunflower protein, fava protein, faba protein, lentil protein, chickpea protein, soya protein, pea protein, canola protein, wheat protein, rapeseed protein and mixture thereof.

The term "plant milk" is also known as plant-based liquids, alternative milk, nut milk or vegan milk which is a plant juice that resembles the color of milk and refers to manufactured, non-dairy beverages made from a water-based plant extract for flavoring and aroma. Preferably, plant milk is selected from a group consisting of almond milk, soy milk, coconut milk, rice milk, oat milk, hemp milk, pea milk, peanut milk, cashew milk, triticale milk, wheat milk, barley milk, spelt milk, millet milk, derives thereof and mixture thereof.

In a preferred embodiment, the water-in-oil emulsion of the invention comprises from 50% to 90% by weight of the fat composition according to the invention; from 10% to 50% by weight of water; from 0.1% to 0.5% by weight of an emulsifier such as lecithin or mono- and diglycerides; from 0.2% to 0.7% by weight of salt; and optionally from 0.2% to 0.7% by weight of milk powder.

In another preferred embodiment, the water-in-oil emulsion of the invention comprises from 50% to 90% by weight of the fat composition according to the invention, preferably from 60% to 85% by weight; from 10% to 50% by weight of aqueous phase, where the aqueous phase comprise from 20% to 100% by weight of plant milk based on the total aqueous phase; from 0.1% to 0.5% by weight of an emulsifier such as lecithin or mono- and diglycerides; from 0% to 1.5% by weight of salt, preferably from 0.05% to 0.8% by weight; and from 0% to 0.2% by weight of flavor, preferably from 0.001% to 0.1% by weight. The plant milk may be natural or fermented or a combination thereof. The plant milk is preferably derived from oat, wheat, almond and soy and even more preferably derived from oat. The plant milk is also even more preferred derived from fermented oat milk or a combination of natural oat milk and fermented oat milk. The use of fermented oat milk might further improve the organoleptic properties such as flavoring in the water-in-oil emulsion such as margarine or spread according to the invention. Plant milk might be named as plant drink, such as oat milk named as oat drink or almond milk named as almond drink or soy milk named as soy drink.

The invention also relates to a process for making a water-in-oil emulsion according to the invention comprising the steps of: a) preparing the fat composition according to the invention, preferably including ingredients soluble in fat such as emulsifier, fat-soluble flavor and fat-soluble colorant; b) preparing an aqueous phase, preferably including ingredients soluble in water such as milk, milk powder, pH regulator, salt, plant milk, carrot juice, lemon juice and sugar; c) emulsifying the fat blend and the aqueous phase to obtain an emulsion; d) crystallizing the obtained emulsion; and e) optionally, pumping a gas in the emulsion during or after step d), wherein the gas is preferably selected from a group consisting of nitrogen, carbon dioxide, argon, air or a combination thereof.

The invention also relates to the use of a water-in-oil emulsion according to the invention in a confectionery product, a bakery product or a culinary product, preferably in Danish pastry, puff pastry, pie, cake, cookie, ice-cream, confectionery filing, cream, whipped cream, compound chocolate, frying, sauce and meat replacer.

The listing or discussion of an apparently prior-published document in this specification should not necessarily be taken as an acknowledgement that the document is part of the state of the art or is common general knowledge.

Preferences and options for a given aspect, embodiment, feature or parameter of the invention should, unless the context indicates otherwise, be regarded as having been disclosed in combination with any and all preferences and options for all other aspects, embodiments, features and parameters of the invention.

The following non-limiting examples illustrate the invention and do not limit its scope in any way. In the examples and throughout this specification, all percentages, parts and ratios are by weight unless indicated otherwise.

### Examples

Throughout these examples:
US-Nx refers to solid fat content determined by NMR on unstabilised fat at x°C (ISO 8292-1);
Cx:y refers to a fatty acid having x carbon atoms and y double bonds; levels determined by GC-FAME (ISO 12966-2 and ISO 12966-4);
SAFA refers to saturated fatty acids;
MUFA refers to mono-unsaturated fatty acids;
PUFA refers to poly-unsaturated fatty acids;
IV FAME refers to calculated iodine value according to AOCS Cd 1c-85;
TRANS refers to trans fatty acids: unsaturated fatty acids having a double bond in a trans arrangement;
CNxx, refers to a triglyceride having xx carbon atoms (excluding the carbon atoms from the glycerol, as is standard practice), levels determined by GC with pretreatment to remove the diglycerides eventually (AOCS Ce 5-86).

### Example 1 - Preparation of Fat Compositions 1 and 2 and Comparative Fat Compositions 1, 2 and 3

A fat blend of 25% by weight of refined cocoa butter and 75% by weight of coconut oil was chemically interesterified using sodium methoxide as catalyst followed by refining including bleaching and deodorization to form a interesterified Fat Blend A as hardstock. Fat Composition 1 was a blend of 64% by weight of the interesterified Fat Blend A, 14% by weight of coconut oil and 22% by weight of rapeseed oil.

A fat blend of 12% by weight of palm stearin with iodine value of about 35, 60% by weight of coconut oil and 28% by weight of refined shea butter was chemically interesterified using sodium methoxide as a catalyst, followed by refining including bleaching and deodorization to form a interesterified Fat Blend B as hardstock. Fat Composition 2 was a blend of 64% by weight of the interesterified Fat Blend B, 14% by weight of coconut oil and 22% by weight of rapeseed oil.

Refined cocoa butter was chemically interesterified using sodium methoxide as a catalyst. After chemical interesterification, the interesterified cocoa butter was formed as hardstock after physical refining. Comparative Fat Composition 1 was a blend of 64% by weight of the interesterified cocoa butter, 14% by weight of coconut oil and 22% by weight of rapeseed oil.

A fat blend of 30% by weight of fully hydrogenated rapeseed oil, 30% by weight of coconut oil, 20% by weight of rapeseed oil and 20% by weight of refined cocoa butter was chemically interesterified using sodium methoxide as a catalyst, followed by refining including bleaching and deodorization to form a interesterified Fat Blend C as hardstock. Comparative Fat Composition 2 was a blend of 64% by weight of the interesterified Fat Blend C, 14% by weight of coconut oil and 22% by weight of rapeseed oil.

A fat blend of 50% by weight of fully hydrogenated rapeseed oil and 50% by weight of coconut oil was chemically interesterified using sodium methoxide as a catalyst, followed by refining including bleaching and deodorization to form a interesterified Fat Blend D as hardstock. This hardstock, Fat Blend D, was also commercially available. Comparative Fat Composition 3 was a blend of 64% by weight of the interesterified Fat Blend D, 14% by weight of coconut oil and 22% by weight of rapeseed oil.

The analytical results of Fat Composition 1, Fat Composition 2, Comparative Fat Composition 1, Comparative Fat Composition 2 and Comparative Fat Composition 3 are shown in Table 1.

**Table 1: Analytical results of Fat Composition 1, Fat Composition 2, Comparative Fat Composition 1, Comparative Fat Composition 2 and Comparative Fat Composition 3.**

| | Fat Composition 1 | Fat Composition 2 | Comparative Fat Composition 1 | Comparative Fat Composition 2 | Comparative Fat Composition 3 |
|---|---|---|---|---|---|
| US-N10 | 51.1 | 46.8 | 57.0 | 54.0 | 67.0 |
| US-N20 | 23.4 | 19.3 | 41.6 | 32.0 | 50.4 |
| US-N25 | 9.1 | 7.9 | 33.1 | 21.2 | 39.0 |
| US-N30 | 0.3 | 1.1 | 25.3 | 12.9 | 26.7 |
| US-N35 | 0.0 | 0.1 | 18.5 | 7.2 | 16.1 |
| US-N40 | 0.0 | 0.0 | 12.6 | 3.5 | 8.2 |
| C8:0 | 3.8 | 3.6 | 0.9 | 2.1 | 3.1 |
| C10:0 | 3.3 | 3.0 | 0.8 | 1.8 | 2.6 |
| C12:0 | 27.8 | 24.8 | 6.3 | 15.1 | 21.3 |
| C14:0 | 11.6 | 10.0 | 2.7 | 6.2 | 8.4 |
| C16:0 | 11.4 | 11.5 | 19.3 | 9.2 | 7.7 |
| C16:1 | 0.1 | 0.1 | 0.2 | 0.1 | 0.1 |
| C17:0 | 0.1 | 0.0 | 0.2 | 0.1 | 0.1 |
| C18:0 | 8.4 | 9.6 | 24.1 | 24.2 | 30.0 |
| C18:1 | 24.3 | 27.5 | 35.6 | 28.3 | 17.6 |
| C18:2 | 6.1 | 6.8 | 6.3 | 7.9 | 5.4 |
| C18:3 | 2.1 | 2.0 | 2.0 | 2.9 | 1.9 |
| C20:0 | 0.4 | 0.5 | 0.9 | 0.7 | 0.8 |
| C20:1 | 0.3 | 0.4 | 0.4 | 0.6 | 0.3 |
| C22:0 | 0.1 | 0.1 | 0.2 | 0.3 | 0.3 |
| C24:0 | 0.1 | 0.1 | 0.1 | 0.1 | 0.1 |
| SAFA | 66.9 | 63.1 | 55.5 | 59.9 | 74.5 |
| MUFA | 24.8 | 28.0 | 36.2 | 29.2 | 18.1 |
| PUFA | 8.2 | 8.8 | 8.3 | 10.8 | 7.3 |
| IV FAME | 37.2 | 41.0 | 47.2 | 46.3 | 29.9 |
| TRANS | 0.2 | 0.2 | 0.3 | 0.3 | 0.1 |
| C12:0/ C18:0 | 3.3 | 2.6 | 0.3 | 0.6 | 0.7 |
| C12:0/ C16:0 | 2.4 | 2.2 | 0.3 | 1.6 | 2.8 |
| C18:0/ C16:0 | 0.7 | 0.8 | 1.2 | 2.6 | 3.9 |
| C8:0+ C10:0 | 7.1 | 6.6 | 1.7 | 3.9 | 5.7 |
| CN26 | 0.0 | 0.0 | 0.0 | 0.0 | 0.0 |
| CN28 | 0.4 | 0.3 | 0.3 | 0.4 | 0.3 |
| CN30 | 1.4 | 1.3 | 0.4 | 0.4 | 0.9 |
| CN32 | 3.9 | 2.9 | 1.3 | 1.6 | 2.4 |
| CN34 | 5.5 | 4.3 | 2.1 | 2.4 | 3.6 |
| CN36 | 9.2 | 7.0 | 2.8 | 3.5 | 5.4 |
| CN38 | 10.4 | 8.6 | 2.6 | 4.4 | 7.0 |
| CN40 | 9.6 | 8.2 | 1.6 | 3.8 | 6.0 |
| CN42 | 12.1 | 11.8 | 1.2 | 6.2 | 9.5 |
| CN44 | 9.0 | 8.8 | 0.7 | 6.6 | 8.4 |
| CN46 | 6.8 | 7.7 | 0.5 | 6.8 | 6.2 |
| CN48 | 5.8 | 8.7 | 2.6 | 13.8 | 12.6 |
| CN50 | 2.7 | 3.9 | 11.5 | 6.5 | 5.6 |
| CN52 | 4.4 | 6.0 | 29.1 | 10.9 | 7.0 |
| CN54 | 17.6 | 19.4 | 40.3 | 30.7 | 23.7 |
| CN56 | 1.0 | 1.1 | 2.5 | 1.6 | 1.2 |
| CN58 | 0.2 | 0.2 | 0.4 | 0.4 | 0.2 |
| CN32+ CN34+ CN36 | 18.6 | 14.2 | 6.2 | 7.5 | 11.4 |
| CN44+ CN46+ CN48 | 21.6 | 25.2 | 3.8 | 27.2 | 27.2 |
| CN50+ CN52 | 7.1 | 9.9 | 40.6 | 17.4 | 12.6 |

### Example 2 - Production of spreadable emulsion products containing around 80% of the (Comparative) Fat Compositions prepared in Example 1

Spreadable emulsion products (Product 1, Product 2, Comparative Product 1, Comparative Product 2 and Comparative Product 3 as listed in Table 2) were prepared on pilot scale using the Fat Compositions and Comparative Fat Compositions prepared in Example 1.

**Table 2 - Overview of spreadable emulsion products containing around 80% fat.**

| Product | Product 1 | Product 2 | Comparative Product 1 | Comparative Product 2 | Comparative Product 3 |
|---|---|---|---|---|---|
| Fat composition (fat phase) | Fat Composition 1 | Fat Composition 2 | Comparative Fat Composition 1 | Comparative Fat Composition 2 | Comparative Fat Composition 3 |

The first step of preparing the emulsion products was the preparation of a fat-soluble ingredients mixture and a water-soluble ingredients mixture. Recipes of spreadable emulsion products are presented in Table 3. Fat-soluble ingredients were fat composition, sunflower lecithin, butter flavor and beta-carotene. Water-soluble ingredients were water, buttermilk powder, salt and citric acid.

**Table 3 - Recipe of spreadable emulsion products containing around 80% fat.**

| Ingredient | Spreadable emulsion product |
|---|---|
| Fat composition | 80% |
| Sunflower lecithin | 0.3% |
| Butter flavor | 0.015% |
| Beta-carotene | 0,0014% |
| Water | 18,6686% |
| Buttermilk powder | 0.50% |
| Salt | 0.50% |
| Citric acid | 0.015% |

Fat phase and aqueous phases were pasteurized separately before making the emulsion. The emulsion was formed by mixing the heated water mixture (55°C) with the heated fat mixture (60°C) in an emulsion tank. Spreadable emulsion products were prepared using a Gerstenberg & Agger pilot perfector with process setup containing 3 chilling tubes, including an additional intermediate crystallizer after two of the three chilling tubes, and a resting tube. Spreadable emulsion products were packed in bricks after the resting tube. Production speed and cooling settings were kept constant for all products. Production speed was 45 kg / hour and crystallizers scraping blades speed was 375 rpm. Five spreadable emulsion products were obtained and stored at 5°C.

### Example 3 - Evaluation of spreadable emulsion products produced in Example 2

The degree of spreadable emulsions fats crystallization in the pilot perfector process depends on the residence time and the rotational speed of the scraped surface blades as well as the crystallization rate of the fat. In order to compare the performance of all the products (Product 1, Product 2, Comparative Product 1, Comparative Product 2 and Comparative Product 3) and the resulting product characteristics, pilot settings were kept constant. Also storage conditions were the same for all samples.

Products targeted to be used as consumer spreads, having good sensory characteristics, need to have good melting behavior. When products have high saturated fat content, melting behavior is the most important characteristic to evaluate in order to estimate product suitability to be used as spreads. Product 1 and Product 2 have saturated fatty acid content 66.9% and 63.1%, respectively, which is intermediate between the levels in Comparative Products 1, 2 and 3, in which the saturated fat acid levels are 55.5%, 59.9% and 74.5%, respectively. If spreadable emulsion product has high level of saturated fat and bad melting behavior, it will not have acceptable sensory characteristics for use as spread.

Samples were evaluated by trained panelists (n=10), and results (as shown in Table 4) demonstrate that Product 1 and Product 2 have excellent desirable melting behavior which differs significantly from Comparative Products 1, 2, and 3.

**Table 4: Sensory scoring of melting behavior in mouth (Panel n=10)**

| Product to be evaluated | Sensory scoring of melting behavior in mouth (average score for a panel of 10 trained persons) |
|---|---|
| | 1= extremely bad melting |
| | 10 = extremely good melting |
| Product 1 | 7.2 |
| Product 2 | 7.5 |
| Comparative Product 1 | 1.0 |
| Comparative Product 2 | 2.7 |
| Comparative Product 3 | 1.7 |

### Example 4 - Preparation of Fat Compositions 3 and 4

The interesterified Fat Blend A as hardstock was made as described in Example 1. Fat Composition 3 was prepared as a blend of 80% by weight of the interesterified Fat Blend A and 20% by weight of rapeseed oil.

A fat blend of 20% by weight of refined cocoa butter, 60% by weight of coconut oil and 20% by weight of rapeseed oil was chemically interesterified using sodium methoxide as catalyst, followed by refining including bleaching and deodorization to form Fat Composition 4 directly.

The analytical results of Fat Composition 3, Fat Composition 4 and the fat blend before interesterification to form Fat Composition 4 (thus a blend of 20% by weight of refined cocoa butter, 60% by weight of coconut oil and 20% by weight of rapeseed oil) are shown in Table 5.

**Table 5 - Analytical results of Fat composition 3 and Fat composition 4.**

| | Fat Composition 3 | Fat Composition 4 | Fat blend before interesterification |
|---|---|---|---|
| US-N10 | 50.4 | 50.9 | 53.1 |
| US-N20 | 24.8 | 20.1 | 7.8 |
| US-N25 | 11.4 | 7.4 | 0.3 |
| US-N30 | 1.2 | 0.1 | 0.1 |
| US-N35 | 0.0 | 0.1 | 0.1 |
| US-N40 | 0.0 | 0.0 | 0.0 |
| C8:0 | 4.3 | 3.9 | 3.9 |
| C10:0 | 3.5 | 3.4 | 3.3 |
| C12:0 | 29.3 | 27.9 | 27.6 |
| C14:0 | 11.1 | 11.2 | 11.2 |
| C16:0 | 11.4 | 12.4 | 12.1 |
| C16:1 | 0.1 | 0.1 | 0.1 |
| C17:0 | 0.1 | 0.1 | 0.1 |
| C18:0 | 8.9 | 9.7 | 9.6 |
| C18:1 | 22.7 | 23.3 | 23.5 |
| C18:2 | 5.9 | 5.5 | 5.6 |
| C18:3 | 1.9 | 1.7 | 1.8 |
| C20:0 | 0.3 | 0.4 | 0.4 |
| C20:1 | 0.2 | 0.2 | 0.3 |
| C22:0 | 0.1 | 0.1 | 0.1 |
| C24:0 | 0.1 | 0.1 | 0.1 |
| SAFA | 69.1 | 69.1 | 68.3 |
| MUFA | 23.0 | 23.6 | 24.0 |
| PUFA | 7.8 | 7.2 | 7.4 |
| IV FAME | 34.9 | 34.3 | 35.1 |
| TRANS | 0.2 | 0.2 | 0.1 |
| C12:0/C18:0 | 3.3 | 2.9 | 2.9 |
| C12:0/C16:0 | 2.6 | 2.3 | 2.3 |
| C18:0/C16:0 | 0.8 | 0.8 | 0.8 |
| C8:0+C10:0 | 7.8 | 7.3 | 7.2 |
| CN26 | 0.0 | 0.1 | 0.0 |
| CN28 | 0.4 | 0.4 | 0.4 |
| CN30 | 1.2 | 1.1 | 2.0 |
| CN32 | 2.8 | 2.5 | 6.8 |
| CN34 | 4.0 | 3.5 | 9.4 |
| CN36 | 7.9 | 6.5 | 11.5 |
| CN38 | 9.7 | 9.4 | 10.6 |
| CN40 | 9.7 | 9.6 | 6.8 |
| CN42 | 13.4 | 15.5 | 5.0 |
| CN44 | 10.2 | 12.5 | 2.9 |
| CN46 | 7.8 | 10.8 | 1.7 |
| CN48 | 6.8 | 14.2 | 1.7 |
| CN50 | 2.9 | 5.7 | 5.1 |
| CN52 | 4.5 | 4.2 | 12.5 |
| CN54 | 17.9 | 4.1 | 22.7 |
| CN56 | 0.8 | 0.2 | 1.1 |
| CN58 | 0.1 | 0.0 | 0.0 |
| CN32+CN34+C N36 | 14.7 | 12.5 | 27.7 |
| CN44+CN46+ CN48 | 24.8 | 37.5 | 6.3 |
| CN50+CN52 | 7.4 | 9.9 | 17.5 |

### Example 5 - Production and recipe of spreadable emulsion products containing around 82% Fat Compositions prepared in Example 4

Spreadable emulsion products (Product 3 and Product 4) were prepared in pilot scale.

**Table 6 - Overview of spreadable emulsion products containing around 82% fat**

| Product | Product 3 | Product 4 |
|---|---|---|
| Fat composition (fat phase) | Fat Composition 3 | Fat Composition 4 |

The first step of preparing emulsions was the preparation of a fat-soluble ingredients mixture and a water-soluble ingredients mixture. Recipes of emulsion products are presented in Table 7. Fat-soluble ingredients were fat composition, sunflower lecithin, beta-carotene and fat soluble butter flavor. Water-soluble ingredients were oat drink, salt and water soluble butter flavor. Oat drink was used instead of water and milk powder in order to prepare a vegan product.

**Table 7 - Recipe of spreadable emulsion products containing around 82% fat**

| Ingredient | Spreadable emulsion product |
|---|---|
| Fat composition | 82% |
| Sunflower lecithin | 0.3% |
| Fat soluble butter flavor | 0.015% |
| Beta-carotene | 0.0014% |
| Oat drink | 16.6686% |
| Salt | 0.50% |
| Water soluble butter flavor | 0.015% |

The fat phase and the aqueous phase were pasteurized separately before making the emulsion. The emulsion was formed by mixing the heated water mixture (55°C) to the heated fat composition (60°C) in an emulsion tank. Emulsion products were prepared using a Gerstenberg & Agger pilot perfector with process setup containing 3 chilling tubes, including an additional intermediate crystallizer after two of the three chilling tubes, and a resting tube. Emulsion products were packed in bricks after the resting tube. Production speed and cooling settings were kept constant for all products. Production speed was 45 kg / hour and crystallizers scraping blades speed was 325 rpm. Two emulsion products were obtained and stored at 5 °C

### Example 6 - Evaluation of spreadable emulsion products produced in Example 5

Product 3 and Product 4 differ in relation to the nature of the liquid oil added in the formation of the fat compositions. In Product 3, liquid oil (rapeseed oil) was mixed with the interesterified fat, while in Product 4, liquid oil (rapeseed oil) was interesterified in combination with the other fats.

Both emulsified Products 3 and 4 show very good performance in crystallization process and very good sensory characteristics. In a sensory expert panel (n=10), in which samples at an age of 2 weeks were tasted, with attributes scored from 0 to 10, both Products 3 and 4 were observed to have very good melting in mouth and very low mouthcoating values. The Products were observed to be hard, but not brittle, and they have very high scoring of smoothness, being very smooth in structure. The results of sensory evaluation are presented in Table 8.

**Table 8 - Sensory evaluation results of Product 3 and 4**

| Attribute | Product 3 | Product 4 |
|---|---|---|
| Brittleness (score 10 is extremely high brittleness) | 3.4 | 1.9 |
| Hardness (score 10 is extremely hard) | 8.7 | 6.9 |
| Smoothness (10 is extremely smooth | 8.7 | 9.0 |
| Melting in mouth (10 is extremely fast melting) | 7.6 | 8.3 |
| Mouthcoating (10 is extremely high mouthcoating) | 0.7 | 0.0 |

The hardness of Products 3 and 4 was measured using the Brookfield texture analyzer (probe TA40 and penetration depth of 5 mm at 2 mm/sec) after storing the samples at 4°C for three months and leaving the samples at 20°C for 40min. Each sample was measured 3 times and the average results are shown in Table 9. The hardness result show how product gets softer when brough up to room temperature, correlating well with sensory evaluation results 'good melting in mouth' and 'no mouthcoating' shown in Table 8. It is especially important that melting behavior does not change during shelf life in order to obtain a desirable and acceptable water-in-oil emulsion products: by measuring the hardness change at room temperature of 3 months-old Products, it is observed that the melting characteristics of Products 3 and 4 have remained very good.

**Table 9 - Hardness of Products 3 and 4**

| | Product 3 | Product 4 |
|---|---|---|
| Hardness (g), cold product 5°C | 1468 | 953 |
| Hardness (g), after 40 minutes storage in 20 °C | 1068 | 666 |
| Hardness reduction % from original value | 29 % | 30 % |

### Example 7 - Preparation of Fat Compositions 5 and 6

The interesterified Fat Blend A as hardstock was made as described in Example 1. Fat Composition 5 was prepared as a blend of 60% by weight of the interesterified Fat Blend A and 40% by weight of rapeseed oil. Fat Composition 6 was prepared as a blend of 45% by weight of the interesterified Fat Blend A, 15% by weight of coconut oil and 40% by weight of rapeseed oil.

The analytical results of Fat Composition 5 and Fat Composition 6 are shown in Table 10.

**Table 10 - Analytical results of Fat Composition 5 and Fat Composition 6.**

| | Fat Composition 5 | Fat Composition 6 |
|---|---|---|
| US-N10 | 35.1 | 34.9 |
| US-N20 | 14.5 | 12.2 |
| US-N25 | 5.5 | 3.1 |
| US-N30 | 0.0 | 0.0 |
| US-N35 | 0.0 | 0.0 |
| US-N40 | 0.0 | 0.0 |
| C8:0 | 2.9 | 3.2 |
| C10:0 | 2.5 | 2.7 |
| C12:0 | 20.9 | 22.6 |
| C14:0 | 8.4 | 9.1 |
| C16:0 | 10.4 | 9.7 |
| C16:1 | 0.2 | 0.1 |
| C17:0 | 0.1 | 0.1 |
| C18:0 | 7.1 | 5.9 |
| C18:1 | 33.6 | 32.5 |
| C18:2 | 9.2 | 9.2 |
| C18:3 | 3.6 | 3.6 |
| C20:0 | 0.4 | 0.4 |
| C20:1 | 0.5 | 0.5 |
| C22:0 | 0.2 | 0.2 |
| C24:0 | 0.1 | 0.1 |
| SAFA | 52.8 | 54.0 |
| MUFA | 34.3 | 33.2 |
| PUFA | 12.8 | 12.8 |
| IV FAME | 54.9 | 53.9 |
| TRANS | 0.2 | 0.2 |
| C12:0/C18:0 | 2.9 | 3.8 |
| C12:0/C16:0 | 2.0 | 2.3 |
| C18:0/C16:0 | 0.7 | 0.6 |
| C8:0+C10:0 | 5.4 | 5.9 |
| CN26 | 0.0 | 0.0 |
| CN28 | 0.5 | 0.5 |
| CN30 | 1.3 | 1.5 |
| CN32 | 2.6 | 3.7 |
| CN34 | 3.4 | 4.9 |
| CN36 | 6.3 | 7.6 |
| CN38 | 7.6 | 8.4 |
| CN40 | 7.6 | 7.4 |
| CN42 | 10.2 | 9.0 |
| CN44 | 8.0 | 6.9 |
| CN46 | 6.4 | 5.4 |
| CN48 | 5.7 | 4.9 |
| CN50 | 2.5 | 2.3 |
| CN52 | 6.3 | 6.5 |
| CN54 | 29.4 | 29.5 |
| CN56 | 1.9 | 1.4 |
| CN58 | 0.0 | 0.2 |
| CN32+CN34+C N36 | 12.3 | 16.2 |
| CN44+CN46+C N48 | 20.1 | 17.2 |
| CN50+CN52 | 8.8 | 8.8 |

### Example 8 - Production and recipe of spreadable emulsion products containing around 60% fat compositions prepared in Example 7

Spreadable emulsion products (Product 5 and Product 6) were prepared at pilot scale.

**Table 11 - Overview of spreadable emulsion products containing around 60% fat**

| Product | Product 5 | Product 6 |
|---|---|---|
| Fat Composition (fat phase) | Fat Composition 5 | Fat Composition 6 |

The first step of preparing emulsion products was the preparation of a fat-soluble ingredients mixture and a water-soluble ingredients mixture. Recipes of spreadable emulsion products are presented in Table 12. Fat-soluble ingredients were fat composition, sunflower lecithin, mono- and diglyceride, beta-carotene and fat soluble butter flavor. Water-soluble ingredients were water, salt and citric acid.

**Table 12 - Recipe of spreadable emulsion products containing around 60% fat.**

| Ingredient | Spreadable emulsion product |
|---|---|
| Fat composition | 60% |
| Sunflower lecithin | 0.2% |
| Emulsifier mono- and diglyceride (Dimodan^{®} UJ) | 0.3% |
| Fat soluble butter flavor | 0.015% |
| Beta-carotene | 0.003% |
| Water | 38.967% |
| Salt | 0.50% |
| Citric acid | 0.015% |

Fat phase and aqueous phases were pasteurized separately before making the emulsion. The emulsion was formed by mixing the heated water mixture (55°C) to the heated fat mixture (60°C) in an emulsion tank. Spreadable emulsion products were prepared using a Gerstenberg & Agger pilot perfector with process setup containing 3 chilling tubes, including an additional intermediate crystallizer after two of the three chilling tubes. Spreadable emulsion products were packed in tubs. Production speed and cooling settings were kept constant for all products. Production speed was 45 kg / hour and crystallizers scraping blades speed was 325 rpm. Two spreadable emulsion products were obtained and stored at 5°C.

### Example 9 - Evaluation of spreadable emulsion products produced in Example 8

Products 5 and 6 were prepared from Fat Compositions containing less saturated fatty acids than Products 1, 2, 3 and 4. Since saturated fatty acid content affects, in general, the hardness of spreadable emulsion products, these Products 5 and 6 were softer than Products 1 to 4. They were evaluated by trained sensory experts (n=10), and results demonstrate that they have extremely good melting in mouth and spreadability. Products that are soft and are easily spreadable makes them very suitable to be packed in tubs and used as spreads. Sensory evaluation results are shown in Table 13.

**Table 13 - Product 5 and 6 sensory evaluation results**

| Attribute | Product 5 | Product 6 |
|---|---|---|
| Hardness (1 = extremely soft, 10 = extremely hard) | 1.7 | 2.1 |
| Spreadability (1 = extremely hard to spread, 10 = extremely easy to spread) | 9.1 | 8.7 |
| Melting in mouth (1 = extremely slow melting, 10 = extremely fast melting) | 8.4 | 8.3 |

The hardness of Products 5 and 6 was measured using the Brookfield texture analyzer (probe TA40 and penetration depth of 5 mm at 2 mm/sec) after storing the samples at 4°C for five days, before leaving the samples at 20°C for 40min. Each sample was measured 3 times and the average results are shown in Table 14. Hardness result show how the Products get softer at room temperature, which correlates well with sensory evaluation results relating to ' good melting in mouth'.

**Table 14 - Hardness of Products 5 and 6**

| | Product 5 | Product 6 |
|---|---|---|
| Hardness, cold product 5°C | 290 | 259 |
| Hardness, after 40 minutes storage in 20 °C | 213 | 161 |
| Hardness reduction % from original value | 27 % | 38 % |

### Example 10 - Preparation of alternative fat compositions suitable for use in the spreadable emulsion products

A fat blend of 20% by weight of refined cottonseed oil, 60% by weight of coconut oil and 20% by weight of refined shea butter was chemically interesterified using sodium methoxide as a catalyst, followed by refining including bleaching and deodorization to form Fat Composition 7 directly.

A fat blend of 15% by weight of palm oil, 60% by weight of coconut oil and 25% by weight of refined shea olein was chemically interesterified using sodium methoxide as a catalyst, followed by refining including bleaching and deodorization to form Fat Composition 8 directly.

A fat blend of 10% by weight of palm stearin with iodine value of about 35, 70% by weight of coconut oil and 20% by weight of refined shea butter was chemically interesterified using sodium methoxide as a catalyst, followed by refining including bleaching and deodorization to form a interesterified Fat Blend E as hardstock. Fat Composition 9 was prepared as a blend of 64% by weight of the interesterified Fat Blend E, 14% by weight of coconut oil and 22% by weight of rapeseed oil.

A fat blend of 20% by weight of fully hydrogenated palm stearin where the palm stearin had an iodine value of about 35 before hydrogenation, 70% by weight of coconut oil and 10% by weight of rapeseed oil was chemically interesterified using sodium methoxide as a catalyst, followed by refining including bleaching and deodorization to form a interesterified Fat Blend F as hardstock. Fat Composition 10 was prepared as a blend of 64% by weight of the interesterified fat blend F, 14% by weight of coconut oil and 22% by weight of rapeseed oil.

The analytical results of Fat Composition 7, Fat Composition 8, Fat Composition 9 and Fat Composition 10 are shown in Table 15.

**Table 15: Analytical results of Fat Composition 7, Fat Composition 8, Fat Composition 9 and Fat Composition 10**

| | Fat Composition 7 | Fat Composition 8 | Fat Composition 9 | Fat Composition 10 |
|---|---|---|---|---|
| US-N10 | 49.5 | 53.0 | 48.5 | 54.1 |
| US-N20 | 19.8 | 22.4 | 20.3 | 27.8 |
| US-N25 | 7.3 | 9.2 | 7.3 | 13.7 |
| US-N30 | 0.2 | 0.9 | 0.2 | 4.7 |
| US-N35 | 0.0 | 0.0 | 0.0 | 1.8 |
| US-N40 | 0.0 | 0.0 | 0.0 | 0.0 |
| C8:0 | 3.8 | 3.9 | 4.0 | 3.8 |
| C10:0 | 3.3 | 3.3 | 3.3 | 3.3 |
| C12:0 | 29.4 | 28.2 | 28.2 | 28.3 |
| C14:0 | 12.1 | 11.5 | 11.5 | 11.6 |
| C16:0 | 11.5 | 14.1 | 11.1 | 14.4 |
| C16:1 | 0.1 | 0.1 | 0.1 | 0.1 |
| C17:0 | 0.0 | 0.0 | 0.0 | 0.0 |
| C18:0 | 10.3 | 9.8 | 7.5 | 7.3 |
| C18:1 | 16.5 | 23.4 | 24.8 | 21.3 |
| C18:2 | 12.0 | 4.5 | 6.4 | 6.5 |
| C18:3 | 0.1 | 0.1 | 1.9 | 2.4 |
| C20:0 | 0.4 | 0.4 | 0.4 | 0.3 |
| C20:1 | 0.1 | 0.2 | 0.4 | 0.4 |
| C22:0 | 0.1 | 0.1 | 0.1 | 0.1 |
| C24:0 | 0.1 | 0.1 | 0.1 | 0.1 |
| SAFA | 71.0 | 71.4 | 66.2 | 69.2 |
| MUFA | 16.7 | 23.7 | 25.3 | 21.9 |
| PUFA | 12.2 | 4.6 | 8.4 | 8.8 |
| IV FAME | 35.6 | 28.4 | 38.0 | 36.2 |
| TRANS | 0.4 | 0.2 | 0.2 | 0.2 |
| C12:0/ C18:0 | 2.9 | 2.9 | 3.8 | 3.9 |
| C12:0/ C16:0 | 2.6 | 2.0 | 2.5 | 2.0 |
| C18:0/ C16:0 | 0.9 | 0.7 | 0.7 | 0.5 |
| C8:0+ C10:0 | 7.1 | 7.2 | 7.3 | 7.1 |
| CN26 | 0.0 | 0.4 | 0.0 | 0.0 |
| CN28 | 0.4 | 0.0 | 0.4 | 0.4 |
| CN30 | 1.3 | 1.4 | 1.4 | 1.3 |
| CN32 | 2.5 | 2.6 | 3.5 | 3.8 |
| CN34 | 3.6 | 3.7 | 5.1 | 5.6 |
| CN36 | 6.7 | 7.0 | 8.6 | 9.2 |
| CN38 | 9.7 | 9.6 | 10.1 | 10.0 |
| CN40 | 9.6 | 10.3 | 9.3 | 9.5 |
| CN42 | 16.3 | 16.5 | 12.2 | 10.2 |
| CN44 | 12.7 | 12.4 | 8.7 | 7.8 |
| CN46 | 10.5 | 11.1 | 6.8 | 6.4 |
| CN48 | 13.6 | 12.7 | 6.8 | 5.9 |
| CN50 | 5.4 | 5.1 | 3.1 | 3.9 |
| CN52 | 3.7 | 3.9 | 4.6 | 5.8 |
| CN54 | 3.8 | 3.2 | 18.4 | 19.1 |
| CN56 | 0.2 | 0.2 | 1.0 | 1.0 |
| CN58 | 0.0 | 0.0 | 0.2 | 0.1 |
| CN32+ CN34+ CN36 | 12.8 | 13.3 | 17.2 | 18.6 |
| CN44+ CN46+ CN48 | 36.8 | 36.2 | 22.3 | 20.1 |
| CN50+ CN52 | 9.1 | 9.0 | 7.7 | 9.7 |

It has been demonstrated that the Fat Compositions according to the invention can be made in different ways by using various fat components as raw materials. These Fat Compositions are suitable to be used as fat phases to prepare the spreadable emulsion Products according to the invention. Nevertheless, Fat composition 10 is less preferred due to the use of hydrogenated fats, since hydrogenation is not preferred by consumers.

## Claims

1. A water-in-oil emulsion comprising:
from 5% to 95% by weight of a fat composition and from 5% to 95% by weight of an aqueous phase;
wherein the fat composition comprises:
from 18.0% to 45.0% by weight of lauric acid (C12:0);
from 5.0% to 20.0% by weight of palmitic acid (C16:0);
from 4.0% to 18.0% by weight of stearic acid (C18:0);
a weight ratio of lauric acid (C12:0) to stearic acid (C18:0) of from 2.0 to 4.5; and
a weight ratio of lauric acid (C12:0) to palmitic acid (C16:0) of from 1.5 to 5.0;
said percentages of acid referring to acids bound as acyl groups in glycerides in the fat composition and being based on the total weight of C8 to C24 fatty acids; and
from 5.0% to 25.0% by weight of total CN32 triglycerides, CN34 triglycerides and CN36 triglycerides;
from 10.0% to 45.0% by weight of total CN44 triglycerides, CN46 triglycerides and CN48 triglycerides; and
from 2.0% to 12.0% by weight of total CN50 triglycerides and CN52 triglycerides;
based on total triglycerides present in the composition.

2. Water-in-oil emulsion according to Claim 1, wherein the water-in-oil emulsion comprises:
from 10% to 90% by weight of the fat composition, preferably from 15% to 85% by weight; and
from 10% to 90% by weight of the aqueous phase, preferably from 15% to 85% by weight.

3. Water-in-oil emulsion according to Claim 1 or Claim 2, wherein the water-in-oil emulsion is an edible spreadable emulsion, preferably margarine or spread.

4. Water-in-oil emulsion according to any of the preceding claims, wherein the aqueous phase comprises or consists of water and/or milk, milk derivates such as whey, buttermilk or cream, or plant milk such as rice milk, soy milk, oat milk or almond milk, and the derivatives thereof.

5. Water-in-oil emulsion according to any of the preceding claims, wherein the water-in-oil emulsion further comprises one or more ingredients selected from emulsifier, flavor, milk, milk powder, colorant, salt, pH regulator, sugar, sirup, cereal, legume, seed, fruit, nut, plant extract, vegetable juice, plant milk, plant protein, antioxidant, preservative, starch, modified starch, fiber, thickener, stabilizer, probiotic and vitamin.

6. Water-in-oil emulsion according to any of the preceding claims, wherein the water-in-oil emulsion comprises from 0.05% to 5.0% by weight of at least one emulsifier, preferably from 0.05 to 3.0% by weight and more preferably from 0.1% to 2.0% by weight.

7. Water-in-oil emulsion according to any of the preceding claims, wherein the water-in-oil emulsion comprises:
from 50% to 90% by weight of the fat composition, preferably from 60% to 85% by weight;
from 10% to 50% by weight of the aqueous phase, wherein the aqueous phase comprises from 20% to 100% by weight of plant milk based on the total aqueous phase;
from 0.1% to 0.5% by weight of an emulsifier such as lecithin or mono- and diglycerides;
from 0% to 1.5% by weight of salt, preferably from 0.05% to 0.8% by weight; and
from 0% to 0.2% by weight of flavor, preferably from 0.001% to 0.1% by weight.

8. Water-in-oil emulsion according to Claim 7, wherein the plant milk is derived from oat, wheat, almond and soy, preferably derived from oat and more preferably derived from fermented oat milk or a combination of natural oat milk and fermented oat milk.

9. Water-in-oil emulsion according to any of the preceding claims, wherein the fat composition comprises:
from 3.5% to 11.0% by weight of total caprylic acid (C8:0) and capric acid (C10:0), preferably from 4.0% to 10.0%, more preferably from 4.5% to 9.5% and even more preferably from 5.0% to 9.0%; and/or
from 18.5% to 40.0% by weight of lauric acid (C12:0), preferably from 19.5% to 38.0% by weight, more preferably from 20.0% to 36.5% by weight and even more preferably from 20.5% to 35.0% by weight; and/or
from 6.0% to 18.0% by weight of palmitic acid (C16:0), preferably from 7.0% to 17.0% by weight, more preferably from 8.0% to 16.0% by weight and even more preferably from 9.0% to 15.0% by weight; and/or
from 4.5% to 16.0% by weight of stearic acid (C18:0), preferably from 5.0% to 15.0% by weight, more preferably from 5.5% to 14.0% by weight and even more preferably from 5.7% to 13.0% by weight; and/or
from 9.0% to 37.0% by weight of oleic acid (C18:1), preferably from 10.0% to 36.0% by weight, more preferably from 11.0% to 35.0% by weight and even more preferably from 12.0% to 34.0%; and/or
from 35.0% to 90.0% by weight of saturated fatty acid (SAFA), preferably from 40.0% to 88.0% by weight, more preferably from 45.0% to 87.0% by weight and even more preferably from 50.0% to 86.0%;
said percentages of acid referring to acids bound as acyl groups in glycerides in the fat composition and being based on the total weight of C8 to C24 fatty acids.

10. Water-in-oil emulsion according to any of the preceding claims, wherein the fat composition comprises:
a weight ratio of lauric acid (C12:0) to stearic acid (C18:0) of from 2.2 to 4.3, preferably from 2.3 to 4.2, more preferably from 2.4 to 4.1 and even more preferably from 2.5 to 4.0; and/or
a weight ratio of lauric acid (C12:0) to palmitic acid (C16:0) of from 1.7 to 4.5, preferably from 1.8 to 4.0, more preferably from 1.9 to 3.5 and even more preferably from 2.0 to 3.0; and/or
a weight ratio of stearic acid (C18:0) to palmitic acid (C16:0) of from 0.3 to 1.5, preferably from 0.4 to 1.3, more preferably from 0.5 to 1.1 and even more preferably from 0.5 to 1.0;
said percentages of acid referring to acids bound as acyl groups in glycerides in the fat composition and being based on the total weight of C8 to C24 fatty acids.

11. Water-in-oil emulsion according to any of the preceding claims, wherein the fat composition comprises:
from 6.0% to 23.0% by weight of total CN32 triglycerides, CN34 triglycerides and CN36 triglycerides, preferably from 7.0% to 22.0% by weight, more preferably from 8.0% to 21.0% by weight and even more preferably from 10.0% to 20.0% by weight; and/or
from 10.5% to 43.0% by weight of total CN44 triglycerides, CN46 triglycerides and CN48 triglycerides, preferably from 11.0% to 42.0% by weight, more preferably from 12.0% to 40.0% by weight and even more preferably from 13.0% to 39.0% by weight; and/or
from 3.0% to 11.0% by weight of total CN50 triglycerides and CN52 triglycerides, preferably from 4.0% to 10.0% by weight, more preferably from 4.5% to 10.0% by weight and even more preferably from 5.0% to 10.0% by weight;
based on total triglycerides present in the composition.

12. Water-in-oil emulsion according to any of the preceding claims, wherein the fat composition comprises:
at most 6.0% by weight of CN32 triglycerides, preferably from 0.1% to 5.0% by weight, more preferably from 0.5% to 4.5% by weight and even more preferably from 1.0% to 4.5% by weight; and/or
at most 8.0% by weight of CN34 triglycerides, preferably from 0.1% to 7.0% by weight, more preferably from 1.0% to 6.0% by weight and even more preferably from 2.0% to 6.0% by weight; and/or
from 7.0% to 20.0% by weight of CN42 triglycerides, preferably from 7.5% to 19.0% by weight, more preferably from 8.0% to 18.0% by weight and even more preferably from 8.5% to 17.0% by weight; and/or from 4.0% to 16.0% by weight of CN44 triglycerides, preferably from 4.5% to 15.0% by weight, more preferably from 5.0% to 14.0% by weight and
even more preferably from 5.5% to 13.0% by weight; and/or from 3.0% to 15.0% by weight of CN46 triglycerides, preferably from 3.5% to 14.0% by weight, more preferably from 4.0% to 13.0% by weight and
even more preferably from 4.5% to 12.0% by weight;
based on total triglycerides present in the composition.

13. Water-in-oil emulsion according to any of the preceding claims, wherein the fat composition has:
from 30.0 to 65.0 solid fat content at 10°C, preferably from 32.0 to 60.0, more preferably from 33.0 to 57.0 and even more preferably from 34.0 to 55.0; and/or
from 10.0 to 40.0 solid fat content at 20°C, preferably from 11.0 to 35.0, more preferably from 11.5 to 32.0 and even more preferably from 12.0 to 30.0; and/or
at most 20.0 solid fat content at 25°C, preferably from 1.0 to 19.0, more preferably from 2.0 to 18.0 and even more preferably from 3.0 to 15.0; and/or
at most 10.0 solid fat content at 30°C, preferably at most 8.0, more preferably at most 7.0 and even more preferably from 0.0 to 5.0; and/or
at most 5.0 solid fat content at 35°C, preferably at most 4.0, more preferably at most 3.0 and even more preferably from 0.0 to 2.0;
measured on unstabilized fat according to ISO 8292-1.

14. Process for making a water-in-oil emulsion according to any of the preceding claims comprising the steps of:
a) Preparing a fat composition wherein the fat composition comprises:
from 18.0% to 45.0% by weight of lauric acid (C12:0);
from 5.0% to 20.0% by weight of palmitic acid (C16:0);
from 4.0% to 18.0% by weight of stearic acid (C18:0);
a weight ratio of lauric acid (C12:0) to stearic acid (C18:0) of from 2.0 to 4.5; and
a weight ratio of lauric acid (C12:0) to palmitic acid (C16:0) of from 1.5 to 5.0;
said percentages of acid referring to acids bound as acyl groups in glycerides in the fat composition and being based on the total weight of C8 to C24 fatty acids; and
from 5.0% to 25.0% by weight of total CN32 triglycerides, CN34 triglycerides and CN36 triglycerides;
from 10.0% to 45.0% by weight of total CN44 triglycerides, CN46 triglycerides and CN48 triglycerides; and
from 2.0% to 12.0% by weight of total CN50 triglycerides and CN52 triglycerides;
based on total triglycerides present in the composition, preferably including ingredients soluble in fat such as emulsifier, fat-soluble flavor and fat-soluble colorant;
b) Preparing an aqueous phase, preferably including ingredients soluble in water such as milk, milk powder, pH regulator, salt, plant milk and sugar;
c) Emulsifying the fat blend and the aqueous phase to obtain an emulsion;
d) Crystallizing the obtained emulsion; and
e) Optionally, pumping a gas in the emulsion during or after step d), wherein the gas is preferably selected from a group consisting of nitrogen, carbon dioxide, argon, air or a combination thereof.

15. Use of a water-in-oil emulsion according to any of Claims 1 to 13 in a confectionery product, a bakery product or a culinary product, preferably in Danish pastry, puff pastry, pie, cake, cookie, ice-cream, confectionery filing, cream, whipped cream, compound chocolate, frying, sauce and meat replacer.

## Patentansprüche

1. Wasser-in-Öl-Emulsion, umfassend:
von 5 bis 95 Gew.-% einer Fettzusammensetzung und von 5 bis 95 Gew.-% einer wässrigen Phase;
wobei die Fettzusammensetzung Folgendes umfasst:
von 18,0 bis 45,0 Gew.-% Laurinsäure (C12:0);
von 5,0 bis 20,0 Gew.-% Palmitinsäure (C16:0);
von 4,0 bis 18,0 Gew.-% Stearinsäure (C18:0);
ein Gewichtsverhältnis von Laurinsäure (C12:0) zu Stearinsäure (C18:0) von 2,0 bis 4,5; und
ein Gewichtsverhältnis von Laurinsäure (C12:0) zu Palmitinsäure (C16:0) von 1,5 bis 5,0;
die Prozentsätze der Säure sich auf Säuren beziehen, die als Acylgruppen in Glyceriden in der Fettzusammensetzung gebunden sind und auf dem Gesamtgewicht der C8- bis C24-Fettsäuren basieren; und
von 5,0 bis 25,0 Gew.-% der gesamten CN32-Triglyceride, CN34-Triglyceride und CN36-Triglyceride;
von 10,0 bis 45,0 Gew.-% der gesamten CN44 Triglyceride, CN46 Triglyceride und CN48 Triglyceride; und
von 2,0 bis 12,0 Gew.-% der gesamten CN50-Triglyceride und CN52-Triglyceride;
basierend auf den gesamten in der Zusammensetzung enthaltenen Triglyceriden.

2. Wasser-in-Öl-Emulsion nach Anspruch 1, wobei die Wasser-in-Öl-Emulsion Folgendes umfasst:
von 10 bis 90 Gew.-% der Fettzusammensetzung, vorzugsweise von 15 bis 85 Gew.-%; und
von 10 bis 90 Gew.-% der wässrigen Phase, vorzugsweise von 15 bis 85 Gew.-%.

3. Wasser-in-Öl-Emulsion nach Anspruch 1 oder 2, wobei die Wasser-in-Öl-Emulsion eine essbare streichfähige Emulsion, vorzugsweise Margarine oder Brotaufstrich, ist.

4. Wasser-in-Öl-Emulsion nach einem der vorstehenden Ansprüche, wobei die wässrige Phase Wasser und/oder Milch, Milchderivate wie Molke, Buttermilch oder Sahne oder Pflanzenmilch wie Reismilch, Sojamilch, Hafermilch oder Mandelmilch und deren Derivate umfasst oder daraus besteht.

5. Wasser-in-Öl-Emulsion nach einem der vorstehenden Ansprüche, wobei die Wasser-in-Öl-Emulsion ferner einen oder mehrere Inhaltsstoffe umfasst, die ausgewählt sind aus Emulgator, Aroma, Milch, Milchpulver, Farbstoff, Salz, pH-Regulator, Zucker, Sirup, Getreide, Hülsenfrucht, Samen, Frucht, Nuss, Pflanzenextrakt, Pflanzensaft, Pflanzenmilch, Pflanzenprotein, Antioxidationsmittel, Konservierungsmittel, Stärke, modifizierte Stärke, Ballaststoffe, Verdickungsmittel, Stabilisator, Probiotikum und Vitamin.

6. Wasser-in-Öl-Emulsion nach einem der vorstehenden Ansprüche, wobei die Wasser-in-Öl-Emulsion 0,05 bis 5,0 Gew.-% mindestens eines Emulgators umfasst, vorzugsweise 0,05 bis 3,0 Gew.-% und noch bevorzugter 0,1 bis 2,0 Gew.-%.

7. Wasser-in-Öl-Emulsion nach einem der vorstehenden Ansprüche, wobei die Wasser-in-Öl-Emulsion Folgendes umfasst:
von 50 bis 90 Gew.-% der Fettzusammensetzung, vorzugsweise von 60 bis 85 Gew.-%;
von 10 bis 50 Gew.-% der wässrigen Phase, wobei die wässrige Phase 20 bis 100 Gew.-% Pflanzenmilch, bezogen auf die gesamte wässrige Phase, umfasst;
von 0,1 bis 0,5 Gew.-% eines Emulgators wie Lecithin oder Mono- und Diglyceride;
von 0 bis 1,5 Gew.-% Salz, vorzugsweise von 0,05 bis 0,8 Gew.-%; und
von 0 bis 0,2 Gew.-% Aroma, vorzugsweise von 0,001 bis 0,1 Gew.-%.

8. Wasser-in-Öl-Emulsion nach Anspruch 7, wobei die Pflanzenmilch aus Hafer, Weizen, Mandeln und Soja abgeleitet ist, vorzugsweise aus Hafer und noch bevorzugter aus fermentierter Hafermilch oder einer Kombination aus natürlicher Hafermilch und fermentierter Hafermilch.

9. Wasser-in-Öl-Emulsion nach einem der vorstehenden Ansprüche, wobei die Fettzusammensetzung Folgendes umfasst:
von 3,5 bis 11,0 Gew.-% der gesamten Caprylsäure (C8:0) und Caprinsäure (C10:0), vorzugsweise von 4,0 bis 10,0 %, noch bevorzugter von 4,5 bis 9,5 % und noch bevorzugter von 5,0 bis 9,0 %; und/oder
von 18,5 bis 40,0 Gew.-% Laurinsäure (C12:0), vorzugsweise von 19,5 bis 38,0 Gew.-%, stärker bevorzugt von 20,0 bis 36,5 Gew.-% und noch stärker bevorzugt von 20,5 bis 35,0 Gew.-%; und/oder
von 6,0 bis 18,0 Gew.-% Palmitinsäure (C16:0), vorzugsweise von 7,0 bis 17,0 Gew.-%, stärker bevorzugt von 8,0 bis 16,0 Gew.-% und noch stärker bevorzugt von 9,0 bis 15,0 Gew.-%; und/oder
von 4,5 bis 16,0 Gew.-% Stearinsäure (C18:0), vorzugsweise von 5,0 bis 15,0 Gew.-%, noch bevorzugter von 5,5 bis 14,0 Gew.-% und noch bevorzugter von 5,7 bis 13,0 Gew.-%; und/oder
von 9,0 bis 37,0 Gew.-% Ölsäure (C18:1), vorzugsweise von 10,0 bis 36,0 Gew.-%, stärker bevorzugt von 11,0 bis 35,0 Gew.-% und noch stärker bevorzugt von 12,0 bis 34,0 %; und/oder
von 35,0 bis 90,0 Gew.-% gesättigter Fettsäure (SAFA), vorzugsweise von 40,0 bis 88,0 Gew.-%, noch bevorzugter von 45,0 bis 87,0 Gew.-% und noch bevorzugter von 50,0 bis 86,0 %;
die Prozentsätze der Säure sich auf Säuren beziehen, die als Acylgruppen in Glyceriden in der Fettzusammensetzung gebunden sind und auf dem Gesamtgewicht der C8- bis C24-Fettsäuren basieren.

10. Wasser-in-Öl-Emulsion nach einem der vorstehenden Ansprüche, wobei die Fettzusammensetzung Folgendes umfasst:
ein Gewichtsverhältnis von Laurinsäure (C12:0) zu Stearinsäure (C18:0) von 2,2 bis 4,3, vorzugsweise von 2,3 bis 4,2, stärker bevorzugt von 2,4 bis 4,1 und noch stärker bevorzugt von 2,5 bis 4,0; und/oder
ein Gewichtsverhältnis von Laurinsäure (C12:0) zu Palmitinsäure (C16:0) von 1,7 bis 4,5, vorzugsweise von 1,8 bis 4,0, stärker bevorzugt von 1,9 bis 3,5 und noch stärker bevorzugt von 2,0 bis 3,0; und/oder
ein Gewichtsverhältnis von Stearinsäure (C18:0) zu Palmitinsäure (C16:0) von 0,3 bis 1,5, vorzugsweise von 0,4 bis 1,3, stärker bevorzugt von 0,5 bis 1,1 und noch stärker bevorzugt von 0,5 bis 1,0;
die Prozentsätze der Säure sich auf Säuren beziehen, die als Acylgruppen in Glyceriden in der Fettzusammensetzung gebunden sind und auf dem Gesamtgewicht der C8- bis C24-Fettsäuren basieren.

11. Wasser-in-Öl-Emulsion nach einem der vorstehenden Ansprüche, wobei die Fettzusammensetzung Folgendes umfasst:
von 6,0 bis 23,0 Gew.-% der gesamten CN32-Triglyceride, CN34-Triglyceride und CN36-Triglyceride, vorzugsweise von 7,0 bis 22,0 Gew.-%, stärker bevorzugt von 8,0 bis 21,0 Gew.-% und noch stärker bevorzugt von 10,0 bis 20,0 Gew.-%; und/oder
von 10,5 bis 43,0 Gew.-% der gesamten CN44-Triglyceride, CN46-Triglyceride und CN48-Triglyceride, vorzugsweise von 11,0 bis 42,0 Gew.-%, stärker bevorzugt von 12,0 bis 40,0 Gew.-% und noch stärker bevorzugt von 13,0 bis 39,0 Gew.-%; und/oder
von 3,0 bis 11,0 Gew.-% der gesamten CN50-Triglyceride und CN52-Triglyceride, vorzugsweise von 4,0 bis 10,0 Gew.-%, stärker bevorzugt von 4,5 bis 10,0 Gew.-% und noch stärker bevorzugt von 5,0 bis 10,0 Gew.-%;
basierend auf den gesamten in der Zusammensetzung enthaltenen Triglyceriden.

12. Wasser-in-Öl-Emulsion nach einem der vorstehenden Ansprüche, wobei die Fettzusammensetzung Folgendes umfasst:
höchstens 6,0 Gew.-% CN32-Triglyceride, vorzugsweise 0,1 bis 5,0 Gew.-%, stärker bevorzugt 0,5 bis 4,5 Gew.-% und noch stärker bevorzugt 1,0 bis 4,5 Gew.-%; und/oder
höchstens 8,0 Gew.-% CN34-Triglyceride, vorzugsweise 0,1 bis 7,0 Gew.-%, stärker bevorzugt 1,0 bis 6,0 Gew.-% und noch stärker bevorzugt 2,0 bis 6,0 Gew.-%; und/oder
von 7,0 bis 20,0 Gew.-% CN42-Triglyceride, vorzugsweise von 7,5 bis 19,0 Gew.-%, stärker bevorzugt von 8,0 bis 18,0 Gew.-% und noch stärker bevorzugt von 8,5 bis 17,0 Gew.-%; und/oder
von 4,0 bis 16,0 Gew.-% CN44 Triglyceride, vorzugsweise von 4,5 bis 15,0 Gew.-%, stärker bevorzugt von 5,0 bis 14,0 Gew.-% und noch stärker bevorzugt von 5,5 bis 13,0 Gew.-%; und/oder
von 3,0 bis 15,0 Gew.-% CN46 Triglyceride, vorzugsweise von 3,5 bis 14,0 Gew.-%, stärker bevorzugt von 4,0 bis 13,0 Gew.-% und noch stärker bevorzugt von 4,5 bis 12,0 Gew.-%;
basierend auf den gesamten in der Zusammensetzung enthaltenen Triglyceriden.

13. Wasser-in-Öl-Emulsion nach einem der vorstehenden Ansprüche, wobei die Fettzusammensetzung Folgendes aufweist:
von 30,0 bis 65,0 Gehalt an festem Fett bei 10 °C, vorzugsweise von 32,0 bis 60,0, stärker bevorzugt von 33,0 bis 57,0 und noch stärker bevorzugt von 34,0 bis 55,0; und/oder
von 10,0 bis 40,0 Gehalt an festem Fett bei 20 °C, vorzugsweise von 11,0 bis 35,0, stärker bevorzugt von 11,5 bis 32,0 und noch stärker bevorzugt von 12,0 bis 30,0; und/oder
höchstens 20,0 Gehalt an festem Fett bei 25 °C, vorzugsweise von 1,0 bis 19,0, stärker bevorzugt von 2,0 bis 18,0 und noch stärker bevorzugt von 3,0 bis 15,0; und/oder
höchstens 10,0 Gehalt an festem Fett bei 30 °C, vorzugsweise höchstens 8,0, stärker bevorzugt höchstens 7,0 und noch stärker bevorzugt von 0,0 bis 5,0; und/oder höchstens 5,0 Gehalt an festem Fett bei 35 °C,
vorzugsweise höchstens 4,0, stärker bevorzugt höchstens 3,0 und noch stärker bevorzugt von 0,0 bis 2,0;
gemessen an nicht stabilisiertem Fett nach ISO 8292-1.

14. Prozess zum Herstellen einer Wasser-in-Öl-Emulsion nach einem der vorstehenden Ansprüche, umfassend die folgenden Schritte:
a) Herstellen einer Fettzusammensetzung, wobei die Fettzusammensetzung Folgendes umfasst:
von 18,0 bis 45,0 Gew.-% Laurinsäure (C12:0);
von 5,0 bis 20,0 Gew.-% Palmitinsäure (C16:0);
von 4,0 bis 18,0 Gew.-% Stearinsäure (C18:0);
ein Gewichtsverhältnis von Laurinsäure (C12:0) zu Stearinsäure (C18:0) von 2,0 bis 4,5; und
ein Gewichtsverhältnis von Laurinsäure (C12:0) zu Palmitinsäure (C16:0) von 1,5 bis 5,0;
die Prozentsätze der Säure sich auf Säuren beziehen, die als Acylgruppen in Glyceriden in der Fettzusammensetzung gebunden sind und auf dem Gesamtgewicht der C8- bis C24-Fettsäuren basieren; und
von 5,0 bis 25,0 Gew.-% der gesamten CN32-Triglyceride, CN34-Triglyceride und CN36-Triglyceride;
von 10,0 bis 45,0 Gew.-% der gesamten CN44 Triglyceride, CN46 Triglyceride und CN48 Triglyceride; und
von 2,0 bis 12,0 Gew.-% der gesamten CN50-Triglyceride und CN52-Triglyceride;
basierend auf den gesamten in der Zusammensetzung enthaltenen Triglyceriden, vorzugsweise unter Einschluss von fettlöslichen Bestandteilen wie Emulgatoren, fettlöslichen Aromen und fettlöslichen Farbstoffen;
b) Herstellen einer wässrigen Phase, vorzugsweise unter Einschluss von in Wasser löslichen Zutaten wie Milch, Milchpulver, pH-Regulator, Salz, Pflanzenmilch und Zucker;
c) Emulgieren der Fettmischung und der wässrigen Phase, um eine Emulsion zu erhalten;
d) Kristallisieren der erhaltenen Emulsion; und
e) optional Pumpen eines Gases in die Emulsion während oder nach Schritt d), wobei das Gas vorzugsweise aus einer Gruppe ausgewählt ist, bestehend aus Stickstoff, Kohlendioxid, Argon, Luft oder einer Kombination davon.

15. Verwendung einer Wasser-in-Öl-Emulsion nach einem der Ansprüche 1 bis 13 in einem Süßwarenprodukt, einem Bäckereiprodukt oder einem kulinarischen Produkt, vorzugsweise in Plundergebäck, Blätterteig, Kuchen, Keksen, Eiscreme, Konditoreifüllung, Sahne, Schlagsahne, zusammengesetzter Schokolade, Braten, Soße und Fleischersatz.

## Revendications

1. Émulsion eau-dans-huile comprenant :
de 5 % à 95 % en poids d'une composition de matières grasses et de 5 % à 95 % en poids d'une phase aqueuse ;
dans laquelle la composition de matières grasses comprend :
de 18,0 % à 45,0 % en poids d'acide laurique (C12:0) ;
de 5,0 % à 20,0 % en poids d'acide palmitique (C16:0) ;
de 4,0 % à 18,0 % en poids d'acide stéarique (C18:0) ;
un rapport pondéral de l'acide laurique (C12:0) à l'acide stéarique (C18:0) de 2,0 à 4,5 ; et
un rapport pondéral de l'acide laurique (C12:0) à l'acide palmitique (C16:0) de 1,5 à 5,0 ;
lesdits pourcentages d'acide faisant référence à des acides liés sous forme de groupes acyle dans des glycérides dans la composition de matières grasses et
étant basés sur le poids total des acides gras en C8 à C24 ; et
de 5,0 % à 25,0 % en poids de triglycérides CN32, CN34 et CN36 totaux ;
de 10,0 % à 45,0 % en poids des triglycérides CN44, CN46 et CN48 totaux ; et
de 2,0 % à 12,0 % en poids des triglycérides CN50 et CN52 totaux ;
sur la base de la teneur totale en triglycérides présents dans la composition.

2. Émulsion eau-dans-huile selon la revendication 1, dans laquelle l'émulsion eau-dans-huile comprend :
de 10 % à 90 % en poids de la composition de matières grasses, de préférence de 15 % à 85 % en poids ; et
de 10 % à 90 % en poids de la phase aqueuse, de préférence de 15 % à 85 % en poids.

3. Émulsion eau-dans-huile selon la revendication 1 ou la revendication 2, dans laquelle l'émulsion eau-dans-huile est une émulsion tartinable comestible, de préférence de la margarine ou une pâte à tartiner.

4. Émulsion eau-dans-huile selon l'une quelconque des revendications précédentes, dans laquelle la phase aqueuse comprend ou est constituée d'eau et/ou de lait, de dérivés du lait tels que le lactosérum, le babeurre ou la crème, ou de laits végétaux tels que le lait de riz, le lait de soja, le lait d'avoine ou le lait d'amande et les dérivés de ceux-ci.

5. Émulsion eau-dans-huile selon l'une quelconque des revendications précédentes, dans laquelle l'émulsion eau-dans-huile comprend en outre un ou plusieurs ingrédients choisis parmi un émulsifiant, un arôme, du lait, du lait en poudre, un colorant, un sel, un régulateur de pH, du sucre, du sirop, des céréales, des légumineuses, des graines, des fruits, des noix, un extrait de plante, du jus de légumes, du lait végétal, des protéines végétales, un antioxydant, un conservateur, de l'amidon, de l'amidon modifié, des fibres, un épaississant, un stabilisant, un probiotique et une vitamine.

6. Émulsion eau-dans-huile selon l'une quelconque des revendications précédentes, dans laquelle l'émulsion eau-dans-huile comprend de 0,05 % à 5,0 % en poids d'au moins un émulsifiant, de préférence de 0,05 % à 3,0 % en poids et plus particulièrement de 0,1 % à 2,0 % en poids.

7. Émulsion eau-dans-huile selon l'une quelconque des revendications précédentes, dans laquelle l'émulsion eau-dans-huile comprend :
de 50 % à 90 % en poids de la composition de matières grasses, de préférence de 60 % à 85 % en poids ;
de 10 % à 50 % en poids de la phase aqueuse, dans laquelle la phase aqueuse comprend de 20 % à 100 % en poids de lait végétal par rapport à la phase aqueuse totale ;
de 0,1 % à 0,5 % en poids d'un émulsifiant tel que la lécithine ou les mono- et diglycérides ;
de 0 % à 1,5 % en poids de sel, de préférence de 0,05 % à 0,8 % en poids ; et
de 0 % à 0,2 % en poids d'arôme, de préférence de 0,001 % à 0,1 % en poids.

8. Émulsion eau-dans-huile selon la revendication 7, dans laquelle le lait végétal est dérivé de l'avoine, du blé, de l'amande et du soja, de préférence dérivé de l'avoine et plus particulièrement dérivé de lait d'avoine fermenté ou d'une combinaison de lait d'avoine naturel et de lait d'avoine fermenté.

9. Émulsion eau-dans-huile selon l'une quelconque des revendications précédentes, dans laquelle la composition de matières grasses comprend :
de 3,5 % à 11,0 % en poids d'acide caprylique (C8:0) et d'acide caprique (C10:0) totaux, de préférence de 4,0 % à 10,0 %, plus particulièrement de 4,5 % à 9,5 % et encore plus particulièrement de 5,0 % à 9,0 % ; et/ou de 18,5 % à 40,0 % en poids d'acide laurique (C12:0),
de préférence de 19,5 % à 38,0 % en poids, plus particulièrement de 20,0 % à 36,5 % en poids et encore plus particulièrement de 20,5 % à 35,0 % en poids ; et/ou
de 6,0 % à 18,0 % en poids d'acide palmitique (C16:0), de préférence de 7,0 % à 17,0 % en poids, plus particulièrement de 8,0 % à 16,0 % en poids et encore plus particulièrement de 9,0 % à 15,0 % en poids ; et/ou
de 4,5 % à 16,0 % en poids d'acide stéarique (C18:0), de préférence de 5,0 % à 15,0 % en poids, plus particulièrement de 5,5 % à 14,0 % en poids et encore plus particulièrement de 5,7 % à 13,0 % en poids ; et/ou
de 9,0 % à 37,0 % en poids d'acide oléique (C18:1), de préférence de 10,0 % à 36,0 % en poids, plus particulièrement de 11,0 % à 35,0 % en poids et encore plus particulièrement de 12,0 % à 34,0 % ; et/ou de 35,0 % à 90,0 % en poids d'acides gras saturés (AGS), de préférence de 40,0 % à 88,0 % en poids, plus particulièrement de 45,0 % à 87,0 % en poids et encore plus particulièrement de 50,0 % à 86,0 % ;
lesdits pourcentages d'acide faisant référence aux acides liés sous forme de groupes acyles dans des glycérides dans la composition de graisse et étant basés sur le poids total des acides gras de C8 à C24.

10. Émulsion eau-dans-huile selon l'une quelconque des revendications précédentes, dans laquelle la composition de matières grasses comprend :
un rapport pondéral de l'acide laurique (C12:0) à l'acide stéarique (C18:0) de 2,2 à 4,3, de préférence de 2,3 à 4,2, plus particulièrement de 2,4 à 4,1 et
encore plus particulièrement de 2,5 à 4,0 ; et/ou un rapport pondéral de l'acide laurique (C12:0) à l'acide palmitique (C16:0) de 1,7 à 4,5, de préférence de 1,8 à 4,0, plus particulièrement de 1,9 à 3,5 et
encore plus particulièrement de 2,0 à 3,0 ; et/ou un rapport pondéral de l'acide stéarique (C18:0) à l'acide palmitique (C16:0) de 0,3 à 1,5, de préférence de 0,4 à 1,3, plus particulièrement de 0,5 à 1,1 et encore plus particulièrement de 0,5 à 1,0 ;
lesdits pourcentages d'acide faisant référence aux acides liés sous forme de groupes acyles dans des glycérides dans la composition de graisse et étant basés sur le poids total des acides gras de C8 à C24.

11. Émulsion eau-dans-huile selon l'une quelconque des revendications précédentes, dans laquelle la composition de matières grasses comprend :
de 6,0 % à 23,0 % en poids de triglycérides CN32, CN34 et CN36 totaux, de préférence de 7,0 % à 22,0 % en poids, plus particulièrement de 8,0 % à 21,0 % en poids et encore plus particulièrement de 10,0 % à 20,0 % en poids ; et/ou
de 10,5 % à 43,0 % en poids de triglycérides CN44, CN46 et CN48 totaux, de préférence de 11,0 % à 42,0 % en poids, plus particulièrement de 12,0 % à 40,0 % en poids et encore plus particulièrement de 13,0 % à 39,0 % en poids ; et/ou
de 3,0 % à 11,0 % en poids de triglycérides CN50 et de triglycérides CN52 totaux, de préférence de 4,0 % à 10,0 % en poids, plus particulièrement de 4,5 % à 10,0 % en poids et encore plus particulièrement de 5,0 % à 10,0 % en poids ;
sur la base de la teneur totale en triglycérides présents dans la composition.

12. Émulsion eau-dans-huile selon l'une quelconque des revendications précédentes, dans laquelle la composition de matières grasses comprend :
au maximum 6,0 % en poids de triglycérides CN32, de préférence de 0,1 % à 5,0 % en poids, plus particulièrement de 0,5 % à 4,5 % en poids et encore plus particulièrement de 1,0 % à 4,5 % en poids ; et/ou au maximum 8,0 % en poids de triglycérides CN34, de préférence de 0,1 % à 7,0 % en poids, plus particulièrement de 1,0 % à 6,0 % en poids et encore plus particulièrement de 2,0 % à 6,0 % en poids ; et/ou de 7,0 % à 20,0 % en poids de triglycérides CN42, de préférence de 7,5 % à 19,0 % en poids, plus particulièrement de 8,0 % à 18,0 % en poids et encore plus particulièrement de 8,5 % à 17,0 % en poids ; et/ou
de 4,0 % à 16,0 % en poids de triglycérides CN44, de préférence de 4,5 % à 15,0 % en poids, plus particulièrement de 5,0 % à 14,0 % en poids et encore plus particulièrement de 5,5 % à 13,0 % en poids ; et/ou
de 3,0 % à 15,0 % en poids de triglycérides CN46, de préférence de 3,5 % à 14,0 % en poids, plus particulièrement de 4,0 % à 13,0 % en poids et encore plus particulièrement de 4,5 % à 12,0 % en poids ;
sur la base de la teneur totale en triglycérides présents dans la composition.

13. Émulsion eau-dans-huile selon l'une quelconque des revendications précédentes, dans laquelle la composition de matières grasses présente :
une teneur en matières grasses solides de 30,0 à 65,0 % à 10 °C, de préférence de 32,0 à 60,0 %, plus particulièrement de 33,0 à 57,0 % et encore plus particulièrement de 34,0 à 55,0 % ; et/ou
une teneur en matières grasses solides de 10,0 à 40,0 % à 20 °C, de préférence de 11,0 à 35,0 %, plus particulièrement de 11,5 à 32,0 % et encore plus particulièrement de 12,0 à 30,0 % ; et/ou
une teneur en matières grasses solides d'au plus 20,0 % à 25 °C, de préférence de 1,0 à 19,0 %, plus particulièrement de 2,0 à 18,0 % et encore plus particulièrement de 3,0 à 15,0 % ; et/ou
une teneur en matières grasses solides d'au plus 10,0 à 30 °C, de préférence d'au plus 8,0, plus particulièrement d'au plus 7,0 et encore plus particulièrement de 0,0 à 5,0 ; et/ou une teneur en matières grasses solides d'au plus 5,0 à 35 °C, de préférence d'au plus 4,0, plus particulièrement d'au plus 3,0 et encore plus particulièrement de 0,0 à 2,0 ;
mesurée sur une matière grasse non stabilisée selon la norme ISO 8292-1.

14. Procédé de préparation d'une émulsion eau-dans-huile selon l'une quelconque des revendications précédentes, comprenant les étapes suivantes :
a) la préparation d'une composition de matières grasses dans laquelle la composition de matières grasses comprend :
de 18,0 % à 45,0 % en poids d'acide laurique (C12:0) ;
de 5,0 % à 20,0 % en poids d'acide palmitique (C16:0) ;
de 4,0 % à 18,0 % en poids d'acide stéarique (C18:0) ;
un rapport pondéral de l'acide laurique (C12:0) à l'acide stéarique (C18:0) de 2,0 à 4,5 ; et
un rapport pondéral de l'acide laurique (C12:0) à l'acide palmitique (C16:0) de 1,5 à 5,0 ;
lesdits pourcentages d'acide faisant référence à des acides liés sous forme de groupes acyle dans des glycérides dans la composition de matières grasses et étant basés sur le poids total des acides gras en C8 à C24 ; et
de 5,0 % à 25,0 % en poids de triglycérides CN32, CN34 et CN36 totaux ;
de 10,0 % à 45,0 % en poids des triglycérides CN44, CN46 et CN48 totaux ; et
de 2,0 % à 12,0 % en poids des triglycérides CN50 et CN52 totaux ;
sur la base des triglycérides totaux présents dans la composition, incluant de préférence des ingrédients solubles dans les matières grasses tels qu'un émulsifiant, un arôme liposoluble et un colorant liposoluble ;
b) la préparation d'une phase aqueuse, comprenant de préférence des ingrédients solubles dans l'eau tels que du lait, du lait en poudre, un régulateur de pH, du sel, du lait végétal et du sucre ;
c) l'émulsification du mélange de matières grasses et de la phase aqueuse pour obtenir une émulsion ;
d) la cristallisation de l'émulsion obtenue ; et
e) éventuellement, le pompage d'un gaz dans l'émulsion pendant ou après l'étape d), dans lequel le gaz est de préférence choisi parmi un groupe constitué d'azote, de dioxyde de carbone, d'argon, d'air ou d'une combinaison de ceux-ci.

15. Utilisation d'une émulsion eau-dans-huile selon l'une des revendications 1 à 13 dans un produit de confiserie, un produit de boulangerie ou un produit culinaire, de préférence dans une pâtisserie danoise, une pâte feuilletée, une tarte, un gâteau, un biscuit, une crème glacée, une garniture de confiserie, une crème, une crème fouettée, un chocolat composé, une friture, une sauce et un substitut de viande.
